# EUROPEAN PATENT SPECIFICATION

(11) **EP 1 214 807 B1**
(45) Date of publication and mention of the grant of the patent: **06.06.2007**
(21) Application number: 00973362.7
(22) Date of filing: 05.09.2000
(51) Int. Cl.: H04J 3/06, H04N 7/173, H04L 12/28

(54) **SYSTEM AND METHOD FOR THE SYNCHRONIZATION AND DISTRIBUTION OF TELEPHONY TIMING INFORMATION IN A CABLE MODEM NETWORK**
SYSTEM UND VERFAHREN ZUR SYNCHRONISIERUNG UND VERTEILUNG VON TELEFONTAKTINFORMATION IN EINEM KABELMODEM-NETZWERK
SYSTEME ET PROCEDE DESTINE A LA SYNCHRONISATION ET A LA DISTRIBUTION D'INFORMATIONS DE SYNCHRONISATION TELEPHONIQUES SUR UN RESEAU MODEM CABLE

(30) Priority: 03.09.1999 US 152254 P
(43) Date of publication of application: 19.06.2002
(73) Proprietor: Broadcom Corporation, Irvine, CA 92617 (US)
(72) Inventor: RABENKO, Theodore, F., Irvine, CA 92618-3616 (US); DENNEY, Lisa, V., Irvine, CA 92618-3616 (US)
(74) Representative: Jehle, Volker Armin
(86) International application number: PCT/US2000/024405
(87) International publication number: WO 2001/019005

(56) References cited:
- EP-A- 0 283 079
- WO-A-98/31115
- US-A- 5 543 951
- SDRALIA V ET AL: "PERFORMANCE CHARACTERISATION OF THE MCNS DOCSIS 1.0 CATV PROTOCOL WITH PRIOTITISED FIRST COME FIRST SERVED SCHEDULING" IEEE TRANSACTIONS ON BROADCASTING,US,IEEE INC. NEW YORK, vol. 45, no. 2, June 1999 (1999-06), pages 196-205, XP000851909 ISSN: 0018-9316
- NN: "Cisco Cable Clock Card for the Cisco uBR7246 VXR Universal Broadband Router" INTERNET PUBLICATION, [Online] pages 1-22, XP002159663 26-03-2000 Retrieved from the Internet: <URL:http://cisco.com/univercd/cc/td/doc/p roduct/cable/cab_r_sw/natlclck.pdf> [retrieved on 2001-01-29]
- DIXON R.C.: 'SPREAD SPECTRUM SYSTEMS, PASSAGE' SPREAD SPECTRUM SYSTEMS 1976, pages 27-27,53 - 55, XP001223896

## Description

### BACKGROUND OF THE INVENTION

Circuits for the distribution and synchronization of timing information play a key role in a number of applications which require a synchronus transfer of data, such as networks for transferring telephone calls over various networks, including the internet, and the like.

Current methods of signal synchronization between sub-networks do not provide complete synchronization. Incomplete synchronization results in data losses called slips. Compensating networks, including buffer circuitry, are typically used to compensate for slips caused by a lack of clock synchronization.

Those having skill in the art will understand the desirability of having a completely synchronus timing of sample collection and reconstruction that eliminates slips and the need for compensating circuitry. This type of network would provide complete synchronization of clocks between sub-networks by providing a series of clocks slaved to a master clock.

WO-A-9831115 describes an interactive information distribution system which includes service provider equipment for generating an information stream that is coupled to an information channel and transmitted to subscriber equipment. The service provider also generates a command signal that is coupled to a command channel and transmitted to the subscriber equipment. The service provider also receives information manipulation requests from the subscriber via a back channel. A communication network supporting the information channel, command channel and back channel is coupled between the service provider equipment and the subscriber equipment.

US-A-5543951 describes a method for receive-side clock supply for video signals digitally transmitted with ATM in fiber/coaxial subscriber line networks. For the receive-side clock supply for digital signals, such as digital data-compressed TV distribution signals, transmitted from a digital signal source, such as a TV signal source, via a connection unit and a light waveguide and/or coaxial line tree network connected thereto and respectively shared in common by a plurality of subscriber-side network termination units to the subscriber-side network termination units in the form of ATM signals, the required signal clock or clocks are separately transmitted at least proceeding from the connection unit to all network termination units connected to the light waveguide and/or coaxial line tree network. The digital signal acquired from the received ATM cells is thus time-regenerated thereat.

SDRALIA V et al.: "Performance characterization of the MCNS DOCSIS 1.0 CATV protocol with priotised first come first served scheduling" IEEE Transactions on Broadcastings, US, IEEE Inc. New York, vol. 45, no. 2, June 1999, pages 196 - 205, ISSN: 0018-9316, relates to a communications system according to the preamble of claim 1.

It is an object of the present invention to provide a communications system and method to facilitate the communication between devices on first and second networks.

This object is achieved by the communications system according to claim 1 and the method of claim 7. Advantageous embodiments of the invention are defined in the dependent claims.

Many of the attendant features of this invention will be more readily appreciated as the same becomes better understood by reference to the following detailed description considered in connection with the accompanying drawings.

### DESCRIPTION OF THE DRAWINGS

These and other features and advantages of the present invention will be better understood from the following detailed description read in light of the accompanying drawings, wherein:
Fig. 1 is an illustration of a network system having synchronous clocking of digital telephony data between a Public Switches telephone network (PSTN) and an internet network via a gateway;
Fig. 2 is a block diagram of an internet telephone transmission system 1002 utilizing a cable television (CATV) network to couple one or more telephones that are in communications with each other;
FIG. 3 is an illustration of an embodiment of a system for the synchronization and distribution of a fully synchronized clock signal;
FIG. 4 shows in simplified block diagram form an environment within which the present invention operates;
FIG. 5 shows in simplified block diagram form the interconnection of an exemplary home utilizing the present invention in accordance with a cable modem and cable modem termination system;
FIG. 6 shows in graphical form the allocation of time slots by the cable modem termination system;
FIGS. 7 and 8 shows in flow diagram form the construction of a frame;
FIGS. 9 and 10 show in simplified block diagram form a portion of the cable modem termination system which receives requests from the cable modems and which generates MAPS in response to the requests;
FIGS. 11 and 12 show in flow diagram form how a cable modem and cable modem termination system cooperate for packets transmitted by the cable modem to the cable modem termination system;
FIGS. 13 and 14 show in block diagram form aspects of the timing synchronization system between the cable modem and the cable modem termination system;

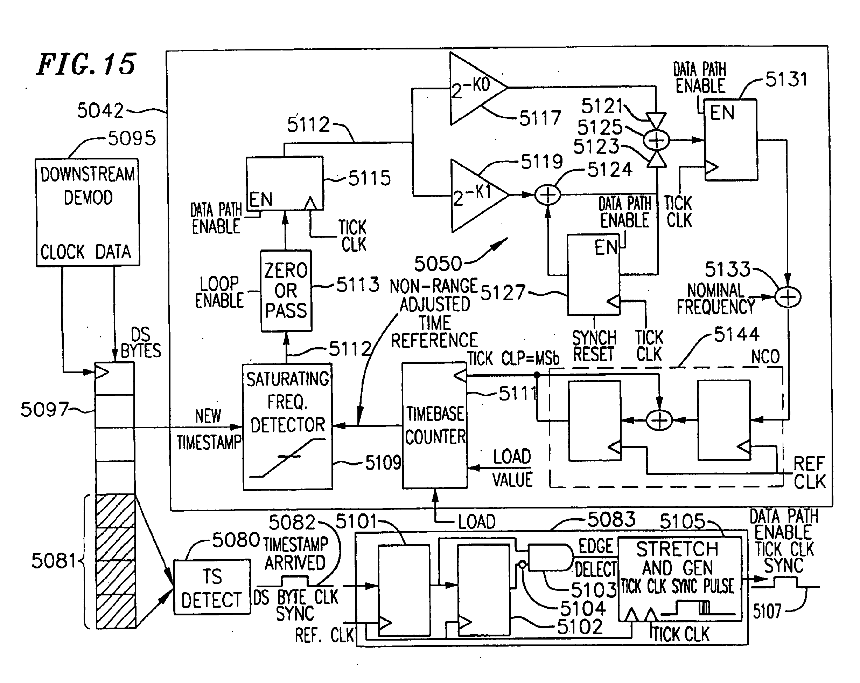

FIG. 15 shows in block diagram form an exemplary timing recovery circuit of a cable modem in more detail;
FIG. 16 shows in table form an example of coarse and fine coefficients suitable for various different update rates and bandwidths;
FIG. 17 shows in graphical form a timing slot offset between the cable modem clock and the cable modem termination system clock;
FIG. 18 shows in simplified block diagram form the burst transmission and reception by the cable modem and the cable modem termination system;
FIG. 19 shows the cable modem termination system in further detail;
FIGS. 20,21 and 22 shows in graphical form relationships between grants and samples;
FIG. 23 shows in simplified block diagram form a representative embodiment of the present invention;
FIG. 24 shows in simplified block diagram form the operation of a headend clock synchronization circuit in,accordance with the present invention;
FIG. 25 shows in simplified block diagram form the operation of a cable modem clock synchronization in accordance with the present invention;
FIGS. 26a, 26b and 26c show in graphical form the inter-relationship of signals used in accordance with the present invention;
FIGS. 27a, 27b and 27c show in graphical for the inter-relationship of further signals used in accordance with the present invention;
FIGS. 28, 29 and 30 show in simplified block diagram and graphical form grant time calculation circuitry in accordance with the present invention;
FIG. 31 shows in simplified block diagram form the inter-relationship between grant time circuitry, digital signal processor and buffers in accordance with the present invention;
FIGS. 32a and 32b shows in flow diagram form an operational DSP system software decision implementation in accordance with the present invention;

Like reference numerals are used to designate like parts in the accompanying drawings.

### DETAILED DESCRIPTION OF THE INVENTION

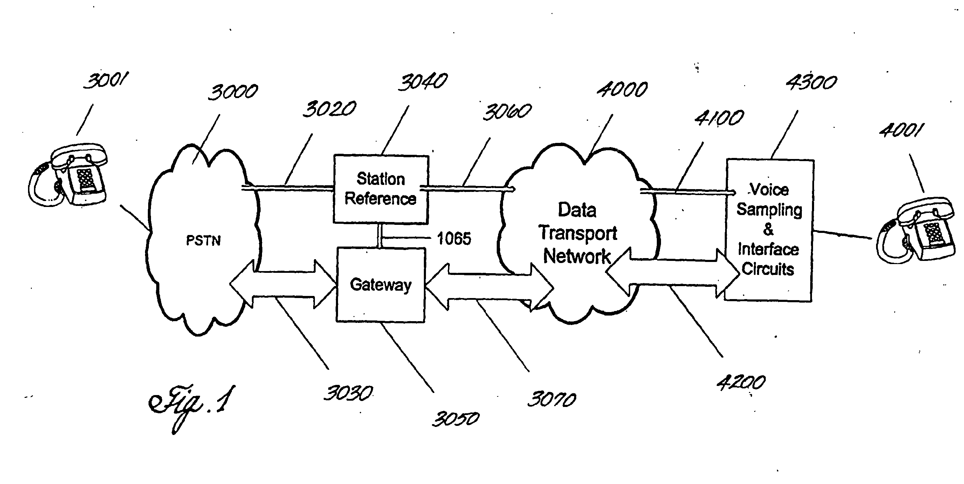

FIG. 1 is an illustration of a network system 0001 having synchronous clocking of voice telephony data between a telephone 3001 coupled to a conventional Public Switched Telephone Network (PSTN) 3000 and a telephone coupled a Digital Data Transport Network 4000. The telephone 3001 coupled to the PSTN uses conventional and ubiquitous interface methods typically used in virtually every home and business in North America today. The telephone 4001 coupled to the Digital Data Transport Network 4000 is capable of being coupled in any of a variety of methods in use today to include, but not limited to Voice over Internet Protocol (VoIP) or Voice over Digital Subscriber Loop (VoDSL).

For the purpose of this example, two telephones 3001 and 4001 are assumed to be identical. However, equivalent devices are available and interchangable including ISDN phone or evolving Ethernet or VoIP phone instruments that provide equivilent functions. Those skilled in the art will recognize that the description of the interfaces and functions that follow are one of many equivilent configurations that are used to practice the described embodiment.

The interface between the telephone 3001 and the PSTN 3000 is a conventional loop start interface as described in the Telcordia document TR-NWT-000057. The interface between the PSTN 3000 and the Station Reference is a conventional Building Integrated Timing System 3020 (BITS) as described in Telcordia TR-N WT-001244. The interface between the PSTN 3000 and the Gateway 3050 is a conventionalGR-303 interface 3030.

The interface 3065 between the Station reference 3040 and the Gateway 3050 is a BITS interface. The interface between the Station Reference 3040 and the Data Transport Network is the well known Data-Over-Cable Service Specification (DOCSIS) as specified by CableLabs in SP-RFI-104-0980724. The interface between the Gateway 3050 and the Data Transport Network 4000 is the well known IEEE 802.3 interface a.k.a. Ethernet. The interface between the Cable Modem 4300 and the Data Transport Network is the well known DOCSIS interface. The interface between the Cable Modem 4300 and the telephone 4001 is the loop start interface as described in TR-NWT-000057.

All of the interfaces used in the practice of this invention are standards based and well known to those skilled in the art. Traditional implementations of Gateway devices between the PSTN and Data Transport networks ignore the timing information provided by the PSTN. The consequence of this design practice is that it tends to introduce large delay and data loss to the voice signal at the gateway thereby compromising the quality of the voice signal.

The present embodiment of the invention provides a system and a method of delivering the PSTN timing information using data transport methods so that the sampling and playout of voice information at the Gateway 3050 and the Cable Modem 2300-2001 is performed synchronously. The synchronous operation of the embodiments of the invention minimizes data loss and the total delay experienced by the voice data as it is transported through the Data Transport Network.

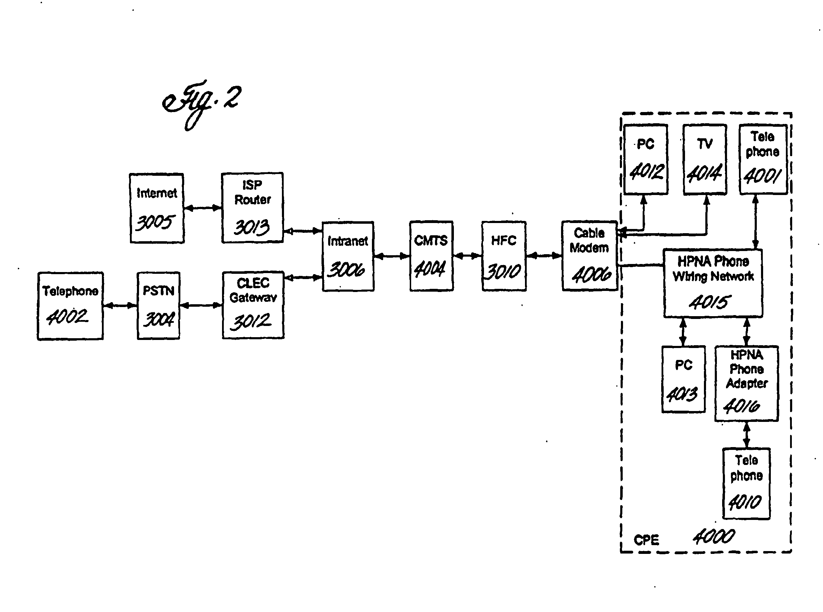

FIG. 2 is a block diagram of an internet telephone transmission system 3002 utilizing a cable television (CATV) network 3026 to couple one or more telephones 4002,4008,4010 that are in communications with each other. The networks described in FIG. 2 are more fully described in below.

In the embodiment shown a telephone 4002 is coupled to a PSTN 3004 in a conventional manner known to those skilled in the art. The PSTN 3004 is coupled to an ISP Gateway 3012. Typically the PSTN to Gateway connection utilizes digital signal transmission as known to those skilled in the art. The ISP gateway 3012 is coupled to an internet 3006 utilizing conventional signal transmission protocols known to those skilled in the art.

The internet1006 is coupled to a CATV network 3026. The CATV network comprises a cable modem termination system (CMTS) 4004, a hybrid fiber coax (HFC) network 3010, and a cable modem 4006. The CMTS 4004 is coupled to the internet 3006 in a conventional manner known to those skilled in the art. The CMTS 4004 is coupled to the HFC 3010 in a conventional manner known to those skilled in the art The HFC 3010 is coupled to the cable modem 4006 in a conventional manner known to those skilled in the art.

The cable modem 4006 is used as an access point to couple other networks, such as an HPNA network 3014, and other devices such as a PC 4012, and a telephone 4001 to the internet 3006. A PC 4012 is coupled to the cable modem 4006 in a conventional manner known to those skilled in the art. A television, or video system 4014 is coupled to the cable modem 4006 in a conventional manner known to those skilled in the art. A telephone 4001 is coupled to the cable modem 4006 in a conventional manner known to those skilled in the art.

The Cable modem 4006 is also coupled to an external network such as an HPNA network 3014 in a conventional manner known to those skilled in the art. The HPNA network shown comprises a HPNA phone adapter 4016. The cable modem 4006 is coupled to the HPNA Phone adapter 4016 in a conventional manner known to those skilled in the art. The HPNA phone adapter is coupled to a conventionally constructed telephone 4008 in a conventional manner known to those skilled in the art. The transmission system, utilizing the cable television network 3026, typically enables a home computer user to network their computer 4012 to the internet 3006 through a cable TV transmission network 3026through a cable modem 4006. And also a user may make telephone calls through a cable modem 4006 as well as receive television broadcasts on a television set 4014.

The transmission of data over the cable television network 3026 is governed by the Data-Over-Cable Service Interface Specification (DOCSIS). In particular the DOCIS specification SP-RFI-104-980724 is relevant to the implementation of the embodiments of the invention.

Transmission of digital telephony data between telephones 4008 in a home network, or equivalently a locally based network 3014, and over the cable television network 3026 to users not directly coupled to the home network 4002 is governed by a HPNA specification 2.0. Thus, because of increasing use of network systems for telephone traffic, utilization of fully synchronous clocking is becoming more important as the demand to transmit voice over a data network increases.

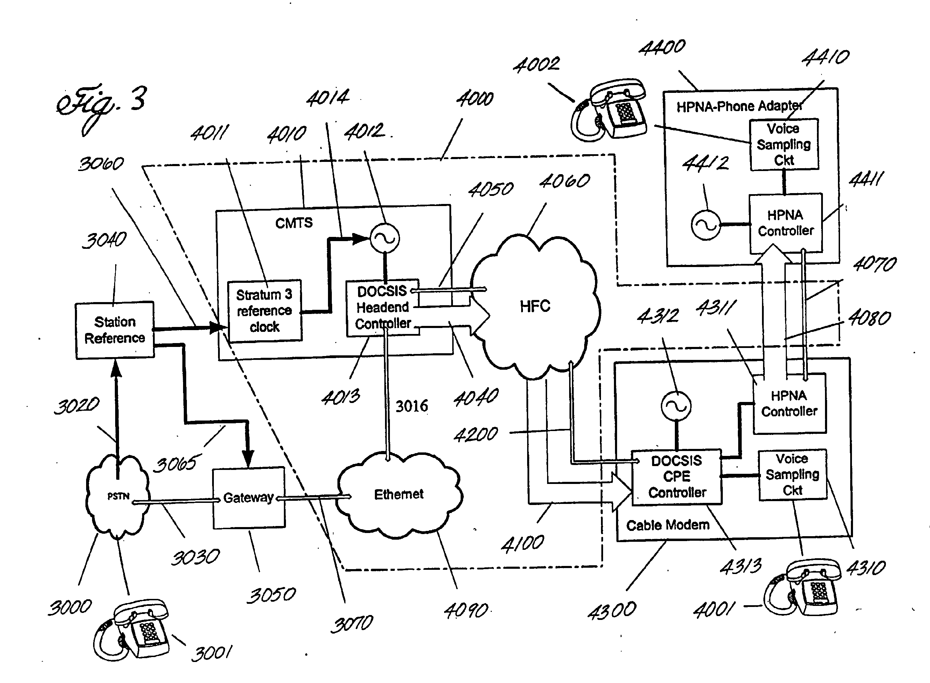

FIG. 3 is an illustration of an embodiment of a system for the distribution of PSTN timing information signals using data transmission techniques. The collection of coupled networks 4060, 4070, 4080, 4090 forms an overall data transport network 4000 in which timing and voice data signals are transported between the PSTN 3000 and Voice Sampling circuits 4310 and 4410 coupled by the Data Transport Network 4000.

The CMTS 4010 is configured to allow the DOCSIS network clock 4012 to be synchronized to the station reference 3040 by using a well known Stratum 3 reference clock 4011. The performance of the Stratum 3 reference clock is defined by Telcordia TR-NWT-001244. Those skilled in the art will recognize that the synchronization interface 4014 between the Stratum 3 reference and the CMTS master oscillator 4012 is a conventionally constructed Phase Lock Loop (PLL) circuit, as known to those skilled in the art. In the embodiment shown, a CMTS 4010 comprises a Stratum 3 reference clock 4011 coupled 4014 to a CMTS master oscillator 4012 using a PLL circuit. The CMTS master oscillator 4012 is coupled to a DOCSIS head end controller 4013. The DOCSIS head end controller is conventionally constructed as is known to those skilled in the art. An example of this device is the commercially available BCM3210 from Broadcom Corporation. The DOCSIS head end controller 4013 couples an HFC 4060 via an upstream and downstream path 4050, to a QoS managed Ethernet 4090 . The CMTS performs a media conversion operation between the DOCSIS RF network and the Ethernet. This operation is described by SP-RFI-I04-980724. The station reference 3040 and the Stratum 3 reference clock 4011 are conventionally constructed as is known to those skilled in the art.

The Hybrid Fiber Coax (HFC) network 4060 is conventionally constructed as is known to those skilled in the art. The HFC 4060network provides physical transmission between the CMTS 4010 and a cable modem 4300. The DOCSIS data transmission method 4050 & 4200 provides a way to deliver Internet Protocol formatted packets imbedded in MPEG frames. A description of this method is described in SP-RFI-104-980724. DOCSIS also identifies a method to transmit the CMTS timing master information 4012, using a DOCSIS specific method, to the Cable Modem 4300. The transmission of the clock information 4040 & 4100 permits the Cable Modem to generate a Timing Recovered Clock (TRC) 4312 that is frequency locked to the CMTS Master clock 4012. This embodiment causes the DOCSIS TRC clock 4312 to be frequency locked to the Station Reference 3040.

The cable modem 4300 comprises a DOCSIS CPE controller coupled to a voice sampling circuit 4310 that is in turn coupled to a conventionally constructed external telephone set 4001. The cable modem is conventionally constructed as is known to those skilled in the art. The Cable Modem TRC 4312 is coupled to the Voice Sampling circuit by conventional methods including clock dividers, as needed to match the rate of the TRC to that required by the Voice Sampling Circuit 4310. An example of the DOCSIS CPE Controller is the BCM3350 from Broadcom Corporation. An example of the Voice Sampling Circuit is the Am79Q031 from Advanced Micro Devices.

The HPNA controller is coupled to the TRC clock by the DOCSIS CPE controller. The HPNA controller provides a method to transmit the TRC timing information using HPNA protocol signals. This circuit is provided as an example to demonstrate that this timing transmission method may be used to further extend the timing network beyond the Cable Modem.

The HPNA controller 4311 of the cable modem serves to couple the HPNA network 4070 to the Ethernet 4090 using the data transport methods provided by the DOCSIS network. The HPNA controller and HPNA network are conventionally constructed as is known to those skilled in the art. The HPNA controller 4311 of the cable modem is coupled 4070 to an HPNA controller 4411 included in an HPNA phone adapter 4400. The HPNA controller 4311 provides a method to transmit the TRC clock 4312 to the HPNA Phone adapter clock 4412 over a messaging interface 4070. The HPNA controller 4411 is coupled to a local clock 4412, and a voice sampling circuit 4410. The voice sampling circuit 4410 is in turn coupled to a conventionally constructed external telephone set 4002.

The PSTN 3000 is conventionally constructed as is known to those skilled in the art. Gateway 3050 is also coupled to the Ethernet 4090, and the PSTN 3000. The PSTN is in turn coupled to a plurality of conventionally constructed telephone sets represented by a single phone 3001.

A cable modem termination system (CMTS) reference 4011 is synchronized to the network station reference 3020. The Station reference 3020 is used to synchronize the internal Stratum 3 reference clock 4011, contained in both the CMTS 4010 and the PSTN Gateway 3050. The Stratum 3 reference clock in the PSTN Gateway 3050 is conventionally constructed as is known to those skilled in the art. The DOCSIS CMTS reference 4012 is slaved to the Stratum 3 reference clock by a Phase Locked Loop (PLL) circuit 4014 .

The DOCSIS CMTS reference 4012 that is synchronized to the PSTN station reference 3040 is transported over the HFC network 4060 to the DOCSIS CPE controller 4313 located in a remote cable modem 4300 using a DOCSIS SYNC method well known to those skilled in the art. The DOCSIS SYNC method causes the DOCSIS CPE controller's clock 4312, to be frequency locked to the CMTS reference clock 4012 which is in turn phase locked to the station reference 3040, which is phase locked to the PSTN clock as provided by the PSTN Clock distribution network. The end result of this connection method is that the DOCSIS CPE Controller's clock 4312, is frequency locked to the PSTN timing distribution network as reflected in the station reference 3040.

At the cable modem 4300, the DOCSIS CPE Controller's Clock 4312, is used to provide timing to voice circuit 4310 that is a part of the cable modem 4300 (or equivalently, are locally coupled to the DOCSIS CPE controller 4313). The DOCSIS CPE Controller's Clock 4312, is also used to provide timing for remotely coupled voice circuits 4411 coupled to an in home network 4080. The present invention connects these remote voice circuits via a conventional Home PNA network. Those skilled in the art will recognize that this connection may be equivalently accomplished by other network means including conventional Ethernet and Token Ring networks. The network connection is not limited to wired methods, as wireless networks provide an equivilent connection under the operation of various standards including the BlueTooth, IEEE 802.1 la/b or HomeRF.

The HPNA Controller 4311 typically contained within the Cable Modem 4300 transmits a synchronized DOCSIS CPE Controller clock 4312, to the coupled HPNA phone adapter4400. The HPNA Phone Adapter 4411 includes a similar HPNA controller 4411 for extracting clock information transmitted utilizing conventional transmission protocols by the cable modem's HPNA controller 4311. Transmission is accomplished via clock transmission MAC messages link 4080. The HPNA Phone Adapter uses the clock information to frequency lock the HPNA Phone adapter internal clock 4412 to the DOCSIS CPE controller clock 4312.

Thus the timing distribution method causes the voice sampling circuit clock 4412 within the HPNA phone adapter to be frequency locked to the DOCSIS CPE controller clock 4312. Also, the voice sampling circuits 4310 within the Cable Modem 4300 are phase locked to the DOCSIS CPE controller clock 4312. Thus, both voice sampling circuits 4311, 4411 are frequency synchronized to the station reference 3040. The voice-sampling circuits in the cable modem 4300 and the HPNA phone adapter 4400 are perforce frequency synchronized to the PSTN Network timing via the station reference 3040.

The method includes utilization of a clock distribution system in which no metallic connection is needed to distribute the clocks to achieve synchronization. A metallic connection exists between station reference 3040 and stratum 3 reference clock 4011 via link 3060 and to the PSTN gateway 3050 via link 3065. The metallic connections are well known and described in the previously mentioned TR-NWT-001244 specification.

Other than the previously mentioned metallic connections, the system distributes 4040, 4100, 4080 timing based upon timing messages that include clock information.

The PSTN Gateway 3050 performs a media conversion function where packet based voice data is received on a first interface form the Ethernet 4090 and converts the samples to a conventional PSTN sample based interface. Those skilled in the art will recognize that the PSTN interface can equivalently be any of a large variety of interface types. In the present embodiment, this interface is assumed to be a conventional T1 interface as described by Telcordia specification GR-303.

The T 1 interface is a digital interface where samples are transmitted synchronously over a speed serial multiplexed interface. The PSTN gateway 3050 collects constant size sets of samples and constructs transmission packets that are transmitted via the available data transmission network to the connected target circuits. In this embodiment the target circuits are the Voice circuit 4310 contained in the Cable Modem 4300 or the HPNA Phone Adapter 4400. The present embodiment uses DOCSIS to transmit data over a Hybrid Fiber Coax (HFC) network 4060 and an Ethernet network 4090 to perform data packet delivery. Those skilled in the art will recognize that these are simple examples of data transmission networks and that equivalently a large number of alternative network transmission systems are well known in this art to accomplish the same connections.

The Customer Premise Equipment (CPE) Voice sampling circuits receive the data packets containing the constant size set of voice samples and play these sample out to an audio interface to the connected telephone device 4001 using the frequency locked local version of the DOCSIS CPE controller clock 4312. This clock is frequency locked to the PSTN timing distribution clock via the Station reference 3040. Thus, these samples will play out at the same rate at the voice sampling circuit 4310,4410 at the same rate that they are arriving at the PSTN gateway 3050. Hence the entire operation is free of data over run or under run impairments that tend to have an adverse affect on the voice quality that would tend to occur if this timing distribution method were not used.

Distribution is a DOCSIS transmission system accomplished by the following method. A conventional DOCSIS transmission system includes a DOCSIS head-end controller 4010, including CMTS master clock 4012. An HFC network 4060 is coupled to the DOCSIS head-in controller 4013 by messaging path 4050,4040. The HFC network 4060 is coupled by messaging path 4040, 4050 to a DOCSIS CPE controller 4313. The DOCSIS CPE controller 4313 includes a local clock 4312. The local clock 4312 is synchronized to clock 4012 by a conventional internally generated DOCSIS clock sync method 4040. Clocks 4312 and 4012 are thus synchronized by a conventional DOCSIS mechanism. In the embodiment described in the DOCSIS system, clock 4012 is the master reference and establishes the time base for the entire DOCSIS network.

A conventionally formatted DOCSIS message includes a message called a sync message that transmits clock rate information concerning clock 4012 so that the controller 4313 contained in the cable modem 4300 uses that information to synchronize clock 4312 to clock 4012. This is the DOCSIS clock transport mechanism.

An embodiment of the invention utilizes the DOCSIS clock transport. The DOCSIS clock transport mechanism is designed solely to transmit a clock signal upstream. The DOCSIS clock transport system is purely a transmitter clock for aiding internal DOCSIS network timing, i.e., the clock is neither imported nor exported.

The embodiment of the invention utilizes a stratum 3 reference clock 4011 to import a master clock. The stratum 3 reference clock 4011 synchronizes itself to the station reference clock 3040. A synchronization signal 4014 synchronizes the CMTS clock 4012 to the stratum reference clock 4011. The stratum 3 reference clock is conventionally constructed as outlined in Belcor standard TR 3244. Synchronization of a station reference 3040 to a Stratum reference clock 3060 is achieved by conventional synchronization circuitry known to those skilled in the art. Thus connected, the stratum 3 reference clock 4011 is now the CMTS 4010, CMTS master reference.

In the embodiment shown, the DOCSIS master reference 6 is slaved to the station reference 4112 through the stratum 3 reference clock 4011. When the DOCSIS system is operating, it transmits clock 4012 to clock 4312. However, what the DOCSIS system is actually doing is transmitting the station reference 3040, since clock 4012 is slaved to clock 3040 which is in turn slaved to the station reference 3040. It is desirable to slave the DOCSIS timing to the station reference 3040 that is also utilized by the PSTN network, since the PSTN is being interfaced to by the HPNA phone system. Thus in effect, the gateway 3050 is operating off of the station reference 3040.

The gateway converts packets arriving from the HFC 4060. The gateway 3050 converts packets arriving from the HFC via the Internet into a PSTN compatible signal. The entire PSTN network is synchronized by the station reference 3040. It is desirable to have packets of data arriving at the gateway 3050 to be timed in synchronization with the station reference 3040 to prevent slips.

The gateway 3050 is a computer that performs protocol conversions between different types of networks and applications allowing signals to be transferred. For example a gateway converts messages between two differing protocols so that a message from a first network may be transported and processed in a second differing network. An Open System Interconnection (OSI) model defines a framework for implementing protocols in layers that is utilized in a gateway. Processing control is passed from one layer to the next, starting at the application layer at a station, and proceeding to the bottom protocol layer, over a channel (such as the internet) to a next station and back up a layered hierarchy at that station. Alternatively a message may be simply passed through a network, once its protocol is converted by a gateway so that it may pass through the network to a different network where it will be processed.

Data arrives at the gateway 3050 via an upstream path that orginates from one of several telephone sets 4002, 4001. The upstream data path for a HPNA phone to the PSTN starts with data path 4070 between the HPNA phone adapter and the cable modem 4300. The next link is from the cable modem to the HFC 4060 via link 4200. The next link is from the HFC to the CMTS 4010 via the upstream data path 4050. The CMTS links upstream data to the Internet via data path 3016. Finally, the Ethernet links the data to the gateway 3050 via data path 3070. At the gateway 3050, it is desirable to transfer the data to the PSTN 3000 without slips.

A slip free environment is alternatively termed a completely synchronous environment. By controlling a sample clock with external station reference 3040, the voice sampling circuit 4310,4410, is completely synchronized to the station reference to provide a slip free conversion. Clock information is used to transmit and receive data. Clock information is also used to develop a sample clock to sample an audio interface at the gateway 3050. Audio samples are converted to data at the station reference rate of the PSTN. This synchronous sampling prevents slipping, simplifying circuitry recognition and tending to improve audio quality.

Slipping occurs when two clocks are not the same, such as the clock for the voice sampling circuit 4310 and the clock for the PSTN which is the station reference 3040. Often the clocks will be close but not the same. In a PSTN, network slip management is utilized. For example, if the voice sampling clock were to be running slightly faster than the station reference clock 3040, then over time the voice sampling circuit 31 would be collecting more samples than the PSTN synchronized to the station reference 3040. Thus, more samples than are capable of being transmitted to the PSTN network are collected. This occurs because the gateway clock 3050 is not fully synchronized to the station reference 3040. A buffer circuit associated with the voice sampling circuit 4310 typically stores the samples. However, if the voice sampling circuit is sampling at a faster rate than the gateway, can clock the data into the PSTN, then a buffer circuit associated with the sampling circuit 4310 will fill up over time and samples will be discarded because they are more than can be processed. To prevent this problem, a slip buffer is typically utilized. In the slip buffer after a certain amount of time samples are discarded. After some of the information has been discarded, the buffer continues to fill up with data samples until a certain percentage of capacity has been reached when samples are again discarded.

In the case where the sampling clock of the voice sampling circuit 4310 is running slower than the station reference 3040 that is driving the synchronization circuitry in the gateway 3050, then the PSTN is accepting more data than the voice sampling circuit 4310 is capable of providing. To deal with this problem, the information is periodically repeated to maintain synchronization with the transmitter. The two techniques just outlined are often termed "slip buffer management". Thus, if the sampling clock 4310 is operating synchronously with the station reference 3040 that is clocking the gateway 3050, data will never slip. Data samples will be collected by the PSTN at exactly the same rate that they are being sent to the PSTN by the internet.

The timing synchronization in the downstream path is accomplished in the same way. Messages sent from the PSTN through the gateway 3050 are sampled with a clock set by the station reference 3040. The station reference is synchronized to a voice sampling circuit 4310 through the stratum 3 reference clock 4011 and the DOCSIS head-in controller through a message sent over the HFC to the DOCSIS CPE controller. This approach to synchronization of clocks in a packet transport network allows management of slippage and the associated circuitry necessary to implement that slip management to be eliminated.

### Cable Modems and the Cable Modem Termination System

In a cable modem system, a headend or cable modem termination system (CMTS) is located at cable company facility and functions as a modem which services a large number subscribers. Each subscriber has a cable modem (CM). Thus, the CMTS facilitates bidirectional communication with any desired one of the plurality of CMs.

The CMTS communicates with the plurality of CMs via a hybrid fiber coaxial (HFC) network, wherein optical fiber provides communication to a plurality of fiber nodes and each fiber node typically serves approximately 500 to 2,000 subscribers, which communicate with the node via coaxial cable. The hybrid fiber coaxial network of a CM system utilizes a point-to-multipoint topology to facilitate communication between the CMTS and the plurality of CMs. Frequency domain multiple access (FDMA)/time division multiplexing (TDM) is used to facilitate communication from the CMTS to each of the CMs, i.e., in the downstream direction. FDMA /time domain multiple access (TDMA) is used to facilitate communication from each CM to the CMTS, i.e.,in the upstream direction.

The CMTS includes a downstream modulator for facilitating the transmission of data communications therefrom to the CMs and an upstream demodulator for facilitating the reception of data communications from the CMs. The downstream modulator of the CMTS utilizes either 64 QAM or 256 QAM in a frequency band of 54 MHz to 860 MHz to provide a data rate of up to 56 Mbps.

Similarly, each CM includes an upstream modulator for facilitating the transmission of data to the CMTS and a downstream demodulator for receiving data from the CMTS. The upstream modulator of each CM uses either QPSK or 16 QAM within the 5 MHz to 42 MHz bandwidth of the upstream demodulator and the downstream demodulator of each CM utilizes either 64 QAM or 256 QAM in the 54 MHz to 860 MHz bandwidth of the downstream modulator (in North America).

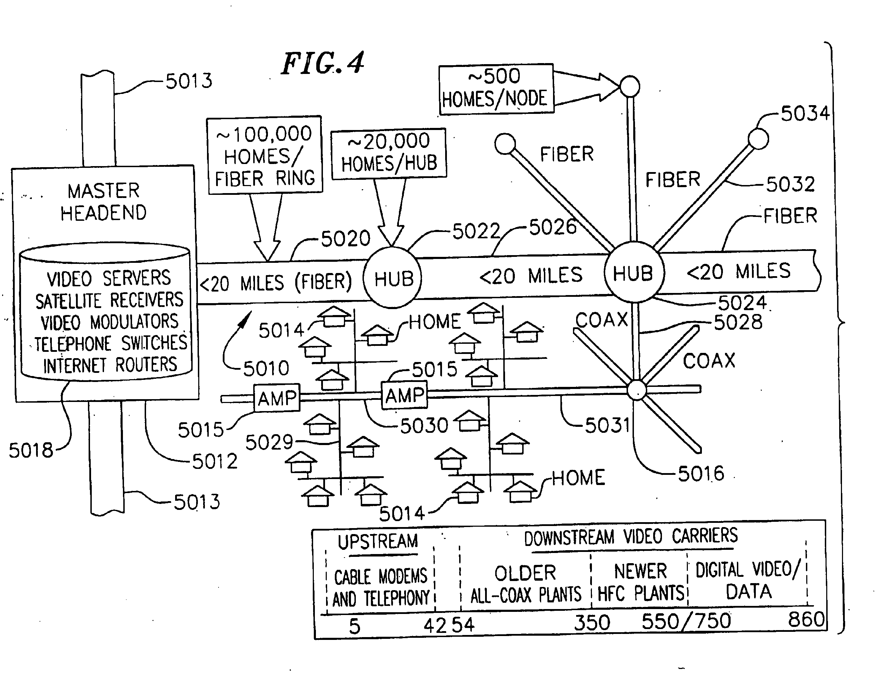

Referring now to FIG. 4, a hybrid fiber coaxial (HFC) network 5010 facilitates the transmission of data between a headend 5012, which includes at least one CMTS, and a plurality of homes 5014, each of which contains a CM. Such HFC networks are commonly utilized by cable providers to provide Internet access, cable television, pay-per-view and the like to subscribers.

Approximately 500 homes 5014 are in electrical communication with each node 5016, 5034 of the HFC network 5010, typically via coaxial cable 5029, 5030, 5031. Amplifiers 5015 facilitate the electrical connection of the more distant homes 5014 to the nodes 5016, 5034 by boosting the electrical signals so as to desirably enhance the signal-to-noise ratio of such communications and by then transmitting the electrical signals over coaxial conductors 5030, 5031. Coaxial conductors 5029 electrically interconnect the homes 5014 with the coaxial conductors 5030, 5031, which extend between amplifiers 5015 and nodes 5016, 5034.

Each node 5016, 5034 is electrically connected to a hub 5022, 5024, typically via an optical fiber 5028, 5032. The hubs 5022, 5024 are in communication with the headend 5012, via optical fiber 5020, 5026. Each hub is typically capable of facilitating communication with approximately 20,000 homes 5014.

The optical fiber 5020, 5026 extending intermediate the headend 5012 and each hub 5022,5024 defines a fiber ring which is typically capable offacilitating communication between approximately 100,000 homes 5014 and the headend 5012.

The headend 5012 may include video servers, satellite receivers, video modulators, telephone switches and/or Internet routers 5018, as well as the CMTS. The headend 5012 communicates via transmission line 5013, which may be a T 1 or T2 line, with the Internet, other headends and/or any other desired device(s) or network.

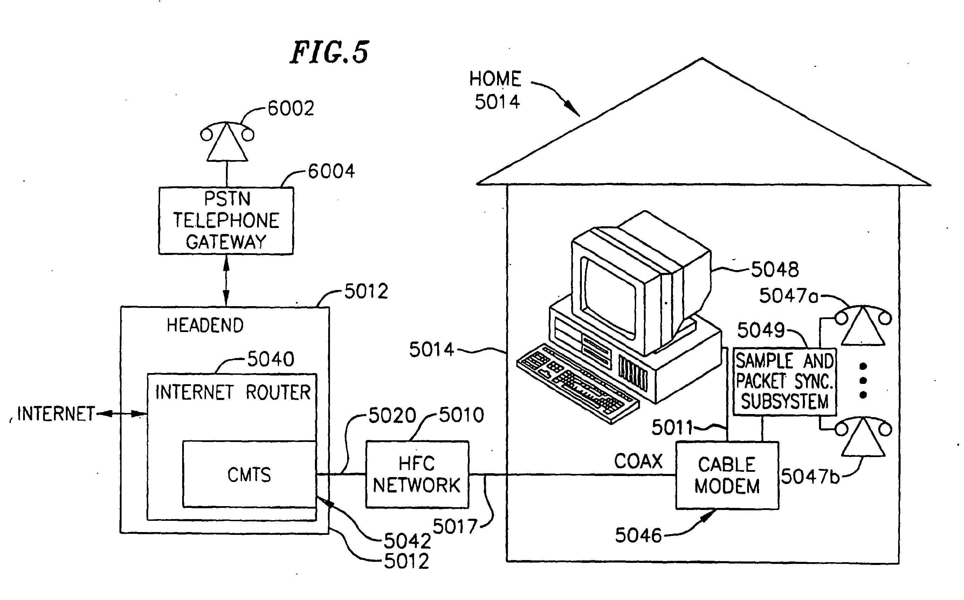

Referring now to FIG. 5, a simplified block diagram shows the interconnection of the headend 5012 and an exemplary home 5014, wherein a CM 5046 communicates with a CMTS 5042, via HFC network 5010. Personal computer 5048, disposed within the home 5014, is connected via cable 5011 to the CM 5046. More particularly, with respect to the present invention, bit-rate sampled data transmission devices 5047a and 5047b, such as telephones, fax or modem units, are connected to sample and packet synchronization subsystem (described in more detail below) which, in turn, interfaces to CM 5046. CM 5046 communicates via coaxial cable 5017 with the HFC network 5044, which, in turn, communicates via optical fiber 5020 with CMTS 5042 of the headend 5012.

Internet router 5040 facilitates communication between the headend 5012 and the Internet or any other desired device or network, and in particular with respect to the present invention, to any end user system to which a call is being placed from home 5014, such as to a call recipient 6002 connected to the Public Switched Telephone Network (PSTN)through PSTN gateway 6004.

In order to accomplish TDMA for upstream communication, it is necessary to assign time slots within which CMs having a message to send to the CMTS are allowed to transmit. The assignment of such time slots is accomplished by providing a request contention area in the upstream data path within which the CMs are permitted to contend in order to place a message which requests additional time in the upstream data path for the transmission of their message. The CMTS responds to these requests by assigning time slots to the CMs making such a request, so that as many of the CMs as possible may transmit their messages to the CMTS utilizing TDMA and so that the transmissions are performed without undesirable collisions. In other words, the CM requests an amount of bandwidth on the cable system to transmit data. In turn, the CM receives a "grant" of an amount of bandwidth to transmit data in response to the request. This time slot assignment by the CMTS is known as a "grant" because the CMTS is granting a particular CM permission to use a specific period of time in the upstream.

Because of the use of TDMA, the CMTS uses a burst receiver, rather than a continuous receiver, to receive data packets from CMs via upstream communications. As those skilled in the art will appreciate, a continuous receiver can only be utilized where generally continuous communications (as opposed to burst communications as in the present invention) are performed, so as to substantially maintain timing synchronization between the transmitter and the receiver, as is necessary for proper reception of the communicated information. During continuous communications, timing recovery is a more straightforward process since signal acquisition generally only occurs at the initiation of such communications. Thus, acquisition is generally only performed in continuous receivers once per continuous transmission and each continuous transmission may be very long.

However, the burst communications inherent to TDMA systems require periodic and frequent reacquisition of the signal. That is, during TDMA communications, the signal must be reacquired for each separate burst transmission being received.

The assignment of such time slots is accomplished by providing a request contention area in the upstream data path within which the CMs are permitted to contend in order to place a message which requests time in the upstream data path for the transmission of their message. The CMTS responds to these requests by assigning time slots to the CMs making such a request, so that as many of the CMs as possible may transmit their messages to the CMTS utilizing TDMA and so that the transmissions are performed without undesirable collisions.

Briefly, upstream data transmission on an upstream channel is initiated by a request made by a CM for a quantity of bandwidth, i.e., a plurality of time slots, to transmit data comprising a message. The size of the request includes payload, i.e., the data being transmitted, and overhead, such as preamble, FEC bits, guard band, etc. After the request is received at the headend, the CMTS grants bandwidth to the requesting CM and transmits the size of the grant and the specific time slots to which the data is assigned for insertion to the requesting CM.

It is important to understand that a plurality of such CMs are present in a CM system and that each of the CMs may, periodically, transmit a request for a time slot allocation to the CMTS. Thus, the CMTS frequently receives such requests and allocates time slots in response to such requests. Information representative of the allocated time slots is compiled to define a MAP and the MAP is then broadcast to all of the CMs on a particular channel, so as to provide information to all of the CMs which have one or more data packets to transmit to the CMTS precisely when each of the CMs is authorized to transmit its data packets).

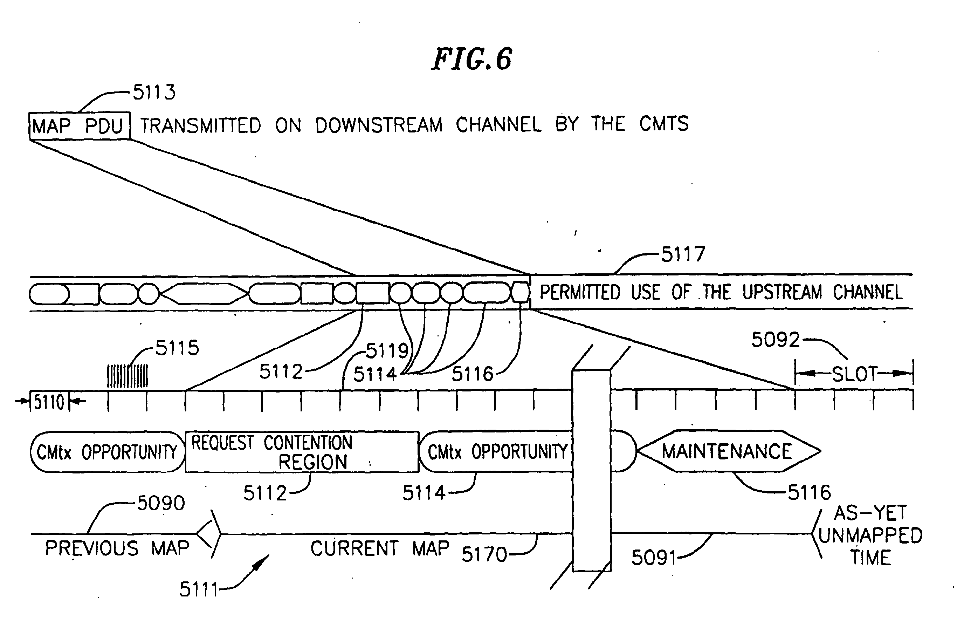

Referring now to FIG. 6, the allocation of time slots by the CMTS and the generation of a MAP which defines the time slot allocations is described in more detail. The contents of a MAP protocol data unit (PDU) 5113 are shown. The MAP PDU 5113, which is transmitted on the downstream channel by the CMTS 5042 to all of the CMs 5046 on a given frequency channel, contains the time slot allocations for at least some of the CMs 5046 which have previously sent a request to transmit one or more data packets to the CMTS 5042. When the channel bandwidth is sufficient, in light of the number of such requests received by the CMTS 5042, then the CMTS 5042 allocates a time slot for each such requesting CM 5046.

Further, the MAP PDU 5113 at least occasionally defines at least one request contention region 112 and generally also contains a plurality of CM transmit opportunities 5114 within the upstream channel 5117. A maintenance frame 5116 may also be defined by the MAP PDU 5113 within the upstream channel 5117, as discussed in detail below.

The request contention region 5112 includes at least one time area within which the CMs 1046 transmit their requests to transmit data packets to the CMTS 5042. Each of the CM transmit opportunities 5114 define a time slot within which a designated CM 5046 is permitted to transmit the data packet for which the request was previously sent to the CMTS 5042.

Additionally, one or more optional transmit contention regions (not shown) may be provided wherein CMs 5046 may contend for the opportunity to transmit data therein. Such transmit contention regions are provided when sufficient bandwidth is left over after the MAP PDU 5113 has allocated transmit opportunities 5114 to all of those CMs 5046 which have requested a time slot allocation. Thus, transmit contention regions are generally provided when upstream data flow is comparatively light.

The upstream channel 5119, is divided into a plurality of time intervals 5110, each of which may optionally be further subdivided into a plurality of sub-intervals 5115. The upstream channel 5119 thus partitioned so as to facilitate the definition of time slots, such that each of a plurality of CMs 5046 may transmit data packets to the CMTS 5042 without interfering with one another, e.g., without having data collisions due to data packets being transmitted at the same time.

Thus, the use of a MAP 5113 facilitates the definition of slots 5092. Each slot 5092 may be used for any desired predetermined purpose, e.g., as a request contention region 5112 or a transmit opportunity 5114. Each slot 5092, as defined by a MAP PDU 113, includes a plurality of time intervals 5110 and may additionally comprise one or more sub-intervals 5115 in addition to the interval(s) 5110. The number of intervals 5110 and sub-intervals 5115 contained within a slot 5092 depends upon the contents of the MAP PDU 5113 which defines the slot 5092. The duration of each interval 5110 and sub-interval 5115 may be defined as desired. Optionally, each sub-interval 5115 is approximately equal to a media access control (MAC) timing interval. Each MAP PDU 5113 defines a frame and each frame defines a plurality of slots 5092.

The beginning of each sub-interval 5115 is aligned in time with the beginning of each interval 5110 and each interval 5110 typically contains an integral number of sub-intervals 5115.

Typically, the request contention region 5112 and each CM transmit opportunity 5114 includes a plurality of integral time intervals 5110. However, the request contention region 5112 and/or the CM transmit opportunity 5114 may alternatively include any desired combination of intervals 5110 and sub-intervals 5115.. Thus, each request contention region 5112 may be utilized by a plurality of the CMs 5046 to request one or more time slot allocations which facilitate the transmission of one or more data packets during the CMs 5046 subsequently allocated transmit opportunity 5114.

Each data packet may contain only data, although an extended data packet may be defined to include both data and a preamble. The preamble is typically stripped from an extended packet by the CMTS 5042 and the data in the packet is then processed by a central processing unit of the CMTS 5042.

The duration of the request contention region 5112 is typically variable, such that it may be sized to accommodate the number of CMs 5046 expected to request time slot allocations from the CMTS 5042. The duration of the request contention region 5112 may thus be determined by the number of requests transmitted by CMs as based upon prior experience.

The time slot allocations 92 defined by CM transmit opportunities 5114 may optionally be defined, at least in part, on the basis of priorities established by the CMTS 5042 for different CMs 5046. For example, priorities may be established for individual CMs 5046 on the basis of an election made by the subscribers, which is typically dependent upon the type of service desired. Thus, a subscriber may elect to have either a premium (high priority) service or a regular (low priority) service.

Alternatively, priorities may be established by the CMTS 5042 for the CMs based upon size and number of CM transmit opportunities 5114 historically requested by the subscribers. Thus, a CM that typically requires a large number of time intervals 5110 may be defined as a high priority user, and thus given priority in the allocation of time slots within a CM transmit opportunity 5114, based upon the assumption that such large usage is indicative of a continuing need for such priority, e.g., is indicative that the subscriber is utilizing cable television, pay-per-view or the like.

Alternatively, the CMTS may assign such priorities based upon the type of service being provided to each CM. Thus, for example, when cable television or pay-per-view is being provided to a CM, then the priority of that CM may be increased, so as to assure uninterrupted viewing.

The priority associated with each CM 5046 may determine both the size of time slots allocated thereto and the order in which such allocations are performed. Those allocations performed earlier in the allocation process are more likely to be completely filled than those allocations performed later in the allocation process. Indeed, allocations performed later in the allocation process may go unfilled, when the bandwidth of the channel is not sufficient to facilitate allocation of time slots for all requesting CMs 5046.

Time slots which define the maintenance region 5116 are optionally provided in a MAP 113. Such maintenance regions 5116 may be utilized, for example, to facilitate the synchronization of the clocks of the CMs with the clock of the CMTS. Such synchronization is necessary in order to assure that each CM 5046 transmits only within its allocated time slots, as defined by each CM's transmit opportunity 5114.

The request contention region 5112 CM transmit opportunity 5114 and maintenance region 5116 typically begin at the beginning of an interval 110 and end at the end of an interval 110. However, each request contention region 5112, CM transmit opportunity 5114 and maintenance region 5116, may begin and end anywhere as desired. Thus, variable duration request contention regions 5112, CM transmit opportunities 5114 and maintenance regions 5116 are provided. Such variable duration request contention regions 5112, transmit opportunities 5114 and maintenance regions 5116 facilitate flexible operation of the CM system and enhance the efficiency of data communications on the CM system by tending to mitigate wasted channel capacity.

The current MAP 5170 is transmitted in the downstream channel 5111 after transmission of a previous MAP 5090 and before any subsequent MAPs 5091. Data, such as data packets associated with web pages, e-mail, cable television, pay-per-view television, digital telephony, etc. are transmitted between adjacent MAPs 5090, 5170, 5091.

The contents of each CM transmit opportunity 5114 optionally include data and a preamble. The data includes at least a portion of the data packet for which a request to transmit was sent to the CMTS 5042. The preamble typically contains information representative of the identification of the CM 5046 from which the data was transmitted, as well as any other desired information.

The data and the preamble do not have to occupy the full time interval of the cable transmit opportunity 5114. Guard bands are optionally provided at the beginning and end of each slot, so as to decrease the precision with which time synchronization between the CMTS and each CM must be performed. Thus, by providing such guard bands, some leeway is provided in the transmit time during which each CM inserts its data packet into the upstream channel 5119.

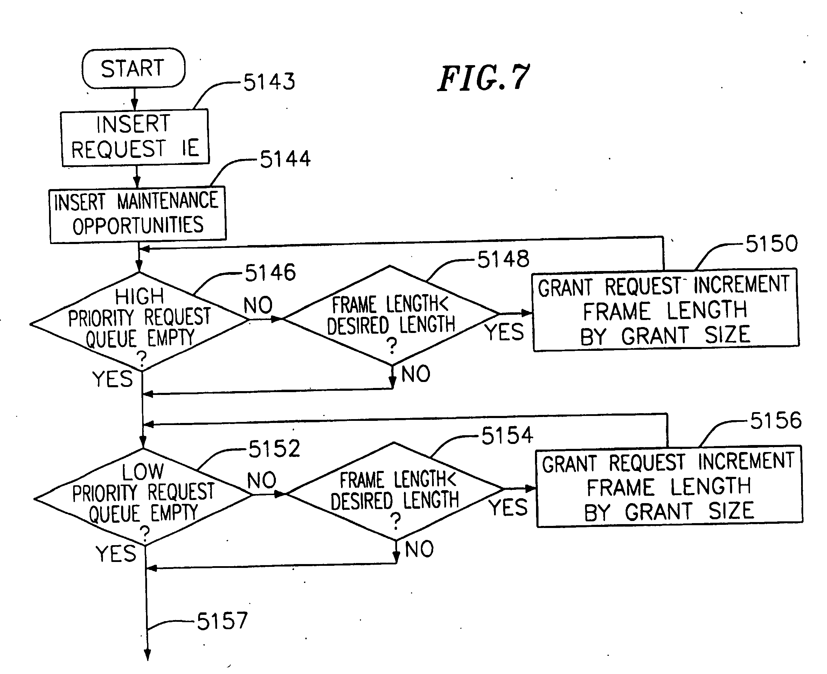

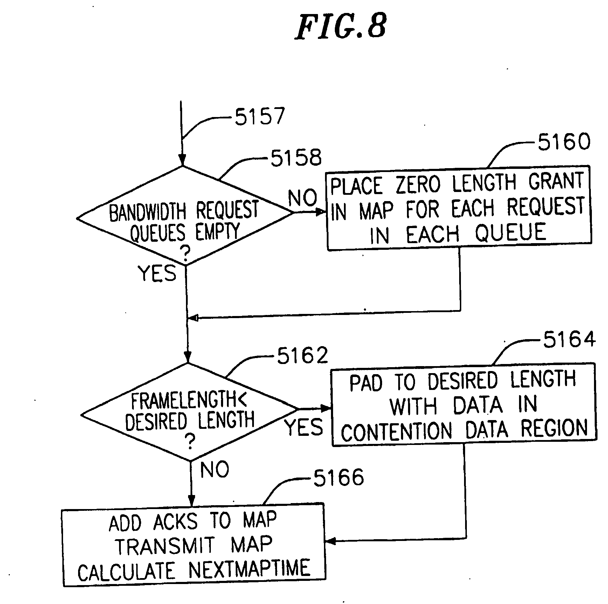

Referring now to FIGS. 7 and 8, the construction of a frame is shown. As shown in block 5143, requests are made by the CMs 5046 in a request contention region 5112 of a first MAP for the grant or allocation by the CMTS 5042 to the subscribers of Information Elements (IE). An Information Element may be considered to be the same as a region. A maintenance opportunity is optionally provided as shown at block 5144. Such maintenance opportunities may, for example, be used to synchronize the operation of the CM 5046 with the operation of the CMTS 1042. As previously indicated, this maintenance opportunity may be provided only periodically.

A determination is then made at block 5146 as to whether the high priority request queue is empty. If the answer is "No" with respect to the high priority request queue, a determination is then made at block 5148 as to whether the frame length is less than a desired length. If the answer is "Yes", the request of the subscriber to transmit data is granted and the frame length is incremented by the size of the data requested at block 5150.

If the high priority request queue is empty, a determination is made at block 5152 as to whether the low priority request queue is empty. If the answer is "No", a determination is made at block 5154 as to whether the frame length will be less than the desired length. If the answer is "Yes" with respect to the low priority request queue, the request of the CM 5046 to transmit data to the CMTS 5042 is granted and the frame length is incremented by the size of the grant. This is indicated at block 5156.

It may sometimes happen that the frame length will be at least equal to the desired length when the request with respect to the high priority request queue is introduced to the block 5148. Under such circumstances, the request is not granted and a determination is then made as to whether the low priority request queue is empty. Similarly, if the frame length will be greater than the desired frame length when a request with respect to the low priority request queue is made, the request is not granted. An indication is accordingly provided on a line 5157 when the high priority request queue and the low priority request queue are both empty or when the frame length will be at least as great as the desired length.

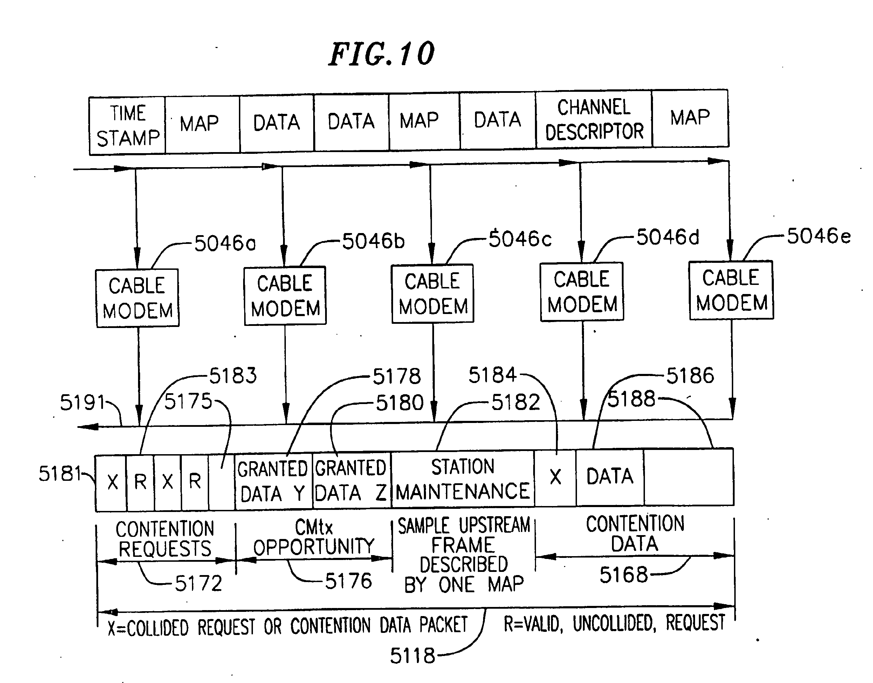

When the high priority request queue and the low priority request queue are both empty or when the frame length will be at least as great as the desired length upon the assumed grant of a request, a determination is made, as at block 5158 (FIG. 10) as to whether the request queues are empty. This constitutes an additional check to make sure that the queues are empty. If the answer to such determination is "No", this indicates that the frame length will be greater than the desired frame length upon the assumed grant of a request. Under such circumstances, a grant of a zero length is provided in the MAP 5170 for each request in each queue. This zero length grant is provided so that the headend can notify the subscriber that the request has not been granted but was received by the headend. In effect, a zero length grant constitutes a deferral. The request was seen, i.e., not collided, but not granted yet. It will be granted in a subsequent MAP 5091.

If a determination is made as at block 5158 that the request queues are empty, a determination is then made at block 5162 as to whether the frame length will be less than the desired frame length. If the answer is "Yes", the frame is padded to the desired length with data from a contention data region 5168 in the frame, as indicated at block 5164. The contention data region 5168 constitutes an area of reduced priority in the frame. It provides for the transmission of data from the CMs 5046 to the CMTS 5042 via available slots in the frame where CMs have not been previously assigned slots by the CMTS 5042. The contention data region does not require a grant by the CMTS 5042 of a request from a CM 5046 as in the request contention data region 5112 in FIG. 6. Since no grant from the CMTS 5042 is required, the contention data region 5168 in FIG. 10 (described below in additional detail) provides faster access to data for the subscriber than the request contention region 5112.

Available slots in a frame are those that have not been assigned on the basis of requests from the CMs 5046. As indicated at block 5166 in FIG. 8, the CMTS 5042 acknowledges to the CM 1046 that the CMTS 1042 has received data from the contention data region in the frame. The CMTS 1042 provides this acknowledgment because the CM 5046 would not otherwise know that such data was not involved in a data collision and has, indeed, has been received from the contention data region 5168.

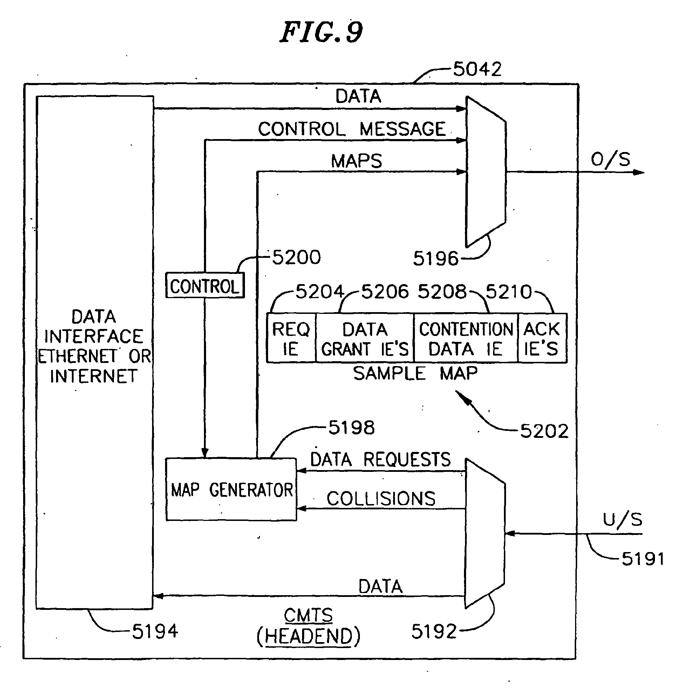

Referring now to FIGS. 9 and 10, a block diagram of that portion of the CMTS 5042 which receives requests from the CMs 5046 and which generator MAPs in response to those requests is shown. The contention data region 5168 in FIG. 10 is included in frame 5118 defined by a MAP 5111 (FIG. 6). The frame 5118 in FIG. 10 may include a number of other regions. One region is indicated at 5172 and is designated as contention requests region 5112 in FIG. 6. It includes slots designated as X 5181. In these slots X 5181, collisions between request data from different CMs 5046 have occurred. Other slots in the contention request region 5172 are designated as R 5183. Valid uncollided request data is present in these slots. The contention request region 5172 also illustratively includes an empty slot 5175. None of the subscribers 14 has made a request in this empty slot 5175.

A CM transmit opportunity region 5176 (corresponding to the CM transmit opportunity region 5114 in FIG. 6) may also be provided in the frame 5118 adjacent the contention request area 5172. As previously indicated, individual CMs 5046 are assigned slots in this area for data in accordance with their requests and with the priorities given by the CMTS 5042 to these requests. Optionally, the CM transmit opportunity region 5176 may be considered as having two sub-regions. In a sub-region 5178, slots are specified for individual subscribers on the basis of requests of a high priority. Slots are specified in an area 180 for individual subscribers on the basis of requests of a low priority.

The frame 5118 may optionally also include a maintenance region 5182. This corresponds to the maintenance region 116 in FIG. 6. As previously described, the region 5182 provides for a time coordination in the clock signals of the CMTS 1042 and the CMs 5046. The frame 5118 additionally may optionally include a region 5184 in the contention data region 5168 where a collision has occurred. Valid data is provided in an area 186 in the frame where no collision occurred. A blank or empty area 5188 may exist at the end of the contention data region 5186 where further data could be inserted, subject to potential collisions. It will be appreciated that the different regions in the frame 5118, and the sequence of these different regions, are illustrative only and that different regions and different sequences of regions may alternatively be provided.

The signals of the frames 5118 from different CMs 1046a, 1046b, 1046c, 1046d, etc. (FIG. 10) are introduced in upstream data processing through a common line 5191 (FIGS. 9 and 10) to a TDMA demultiplexer 5192 (FIG. 9) in the CMTS 1042. After demultiplexing, data in from the CMs 1046a, 1046b, 1046c, 1046d, etc. pass from the demultiplexer 5192 to a data interface 5194. The signals at the data interface 5194 are processed in an Ethernet system (not shown) or the like. The operation of the MAP generator 5198 is controlled by data requests from the individual CMs 1046a, 1046b, 1046c, 1046d, etc. and by collision information which is indicative of the CMs 1046a, 1046b, 1046c, 1046d, etc. attempts to insert data in the contention data region 168. Thus, for example, a large number of collision may indicate a need for a larger contention request region 5172 in the next MAP. Attempts to insert data in the contention data region 5168 may, optionally, be utilized by the MAP generator 5198 to increase the priority of any CM unsuccessfully attempting to transmit such data. The MAPs generated by the MAP generator 5198 pass through the multiplexer 5196 and are broadcast by the CMTS 5042 to the CMs 1046a, 1046b, 1046c, 1046d.

A sample MAP generated by the MAP generator 5198 is generally indicated at 5202 in FIG. 9. The MAP 5202 includes a region 5204 where the requests of the CMs 5046 for Information Elements (IE) within which to transmit data are indicated. As previously indicated, an Information Element (IE) may be considered to be the same as a region. The MAP 5202 also includes a region 5206 where the CMTS 5042 has granted the requests of the subscribers for Information Elements to transmit data. The MAP 5202 additionally includes a contention data region 5208 where the CMTS 5042 has given the CMs 5046 the opportunity to transmit data in available spaces or slots without specifying the open spaces or slots where such transmission is to take place. An acknowledgment region 5210 is also included in the MAP 5202. In this region, the CMTS 5042 acknowledges to the CM 5046 that it has received data from the subscribers in the available slots in the contention data region 208. As discussed above, the CMTS 5042 has to provide such acknowledgment because the CMs 5046 will not otherwise know that the CMTS 1042 has received the data from the CMs 5046 in the contention data region 5208.

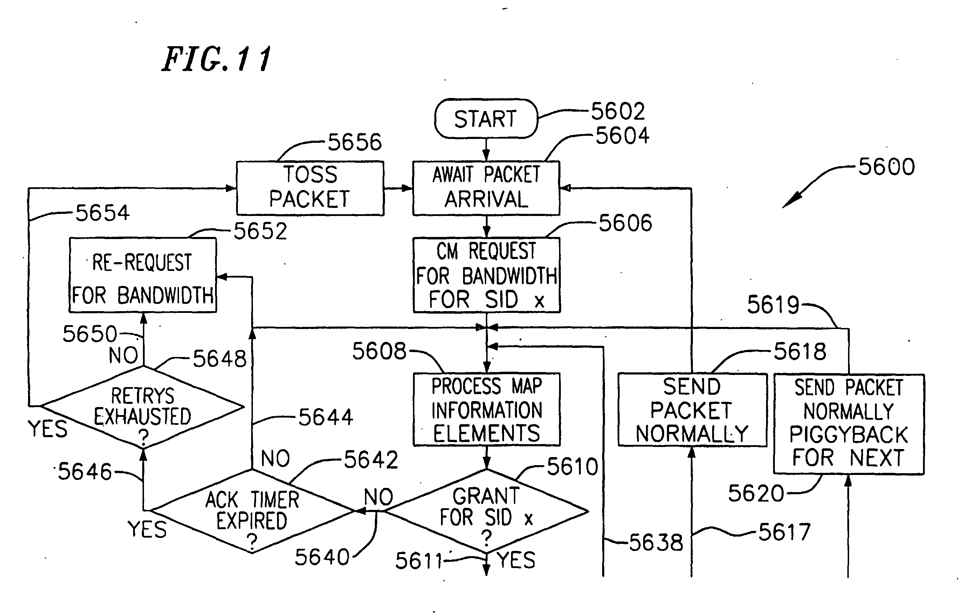

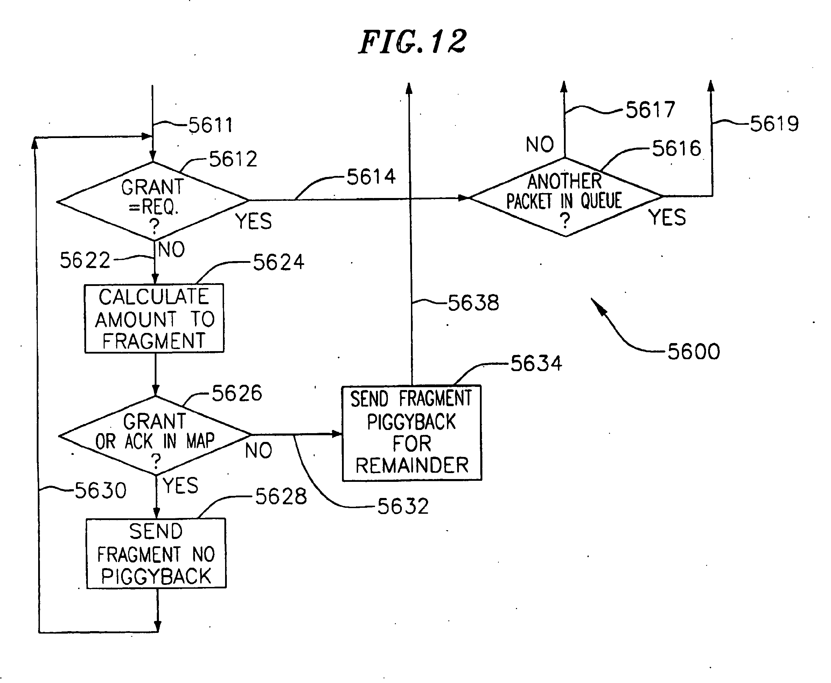

FIGS. 11 and 12 define a flowchart, generally indicated at 5600, in block form and show how the CM 1046 and the CMTS 1042 cooperate for packets transmitted by the CM 5046 to the CMTS 5042. The operation of the blocks in the flowchart 600 is initiated at a start block 5602. As indicated at block 5604 in FIG. 11, the CM 5046 then awaits a packet from an external source. For example, the external source may be a personal computer (PC) 5048, or bit-rate sampled data transmission device 1047a, 1047b (FIG. 5) at the home 1014 of a subscriber. As shown in block 5606, the CM 5046 then submits to the CMTS 5042 a bandwidth request for enough time slots to transmit the packet. Upon receipt of the request, the CMTS sends a grant or partial grant to the CM in the MAP. The CM 5046 then checks at block 5610 to determine if the CMTS 5042 has granted the request, or any portion of the request, from the CM 5046. In block 5610, SID is an abbreviation of Service Identification, for example, a SID assigned to bit-rate sampled data transmission device 5047a. If the answer is "Yes" (see line 5611 in FIGS. 11 and 12), the CM 5046 then determines if the CMTS 5042 has granted the full request from the CM 5046 for the bandwidth. This corresponds to the transmission of the complete data packet from the CM 5046 to the CMTS 5042. This is indicated at block 5612 in FIG. 12.

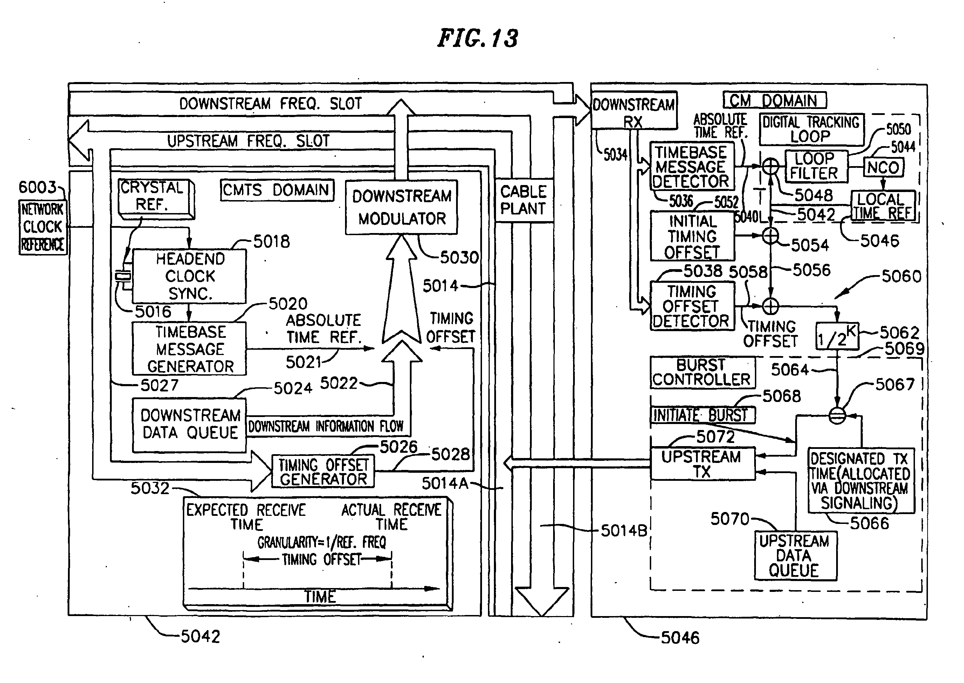

If the answer is "Yes", as indicated at block 5614 in FIG. 12, the CM 5046 determines if there is another packet in a queue which is provided to store other packets awaiting transmission to the CMTS 5042 from the CM 5046. This determination is made at block 5616 in FIG. 11. If there are no other packets queued, as indicated on a line 5617 in FIGS. 11 and 12, the CM 5046 sends the packet without a piggyback request to the CMTS 5042 (see block 5618 in FIG. 11) and awaits the arrival of the next packet from the external source as indicated at 5604. If there are additional packets queued as indicated by a line 5619 in FIGS. 11 and 12, the CM 5046 sends to the CMTS 5042 the packet received from the external source and piggybacks on this transmitted packet a request for the next packet in the queue. This is indicated at 5620 in FIG. 13. The CM then returns to processing MAPs at 5608 looking for additional grants. The CMTS 5042 then processes the next request from the CM.

The CMTS 5042 may not grant the full request for bandwidth from the CM 5046 in the first MAP 111. The CMTS 1042 then provides this partial grant to the CM 1046. If the CMTS operates in multiple grant mode, it will place a grant pending or another grant in the MAP in addition to the partial grant it sends to the CM. The CM processes the MAPs as shown in 5608 and sees the grant in 5611. The grant is smaller than the request as on 5622 so the CM calculates the amount of the packet that will fit in the grant as on 5624. With a multiple grant mode CMTS, the CM will see the partial grant with an additional grant or grant pending in subsequent MAPs as in 5610 and 5611. The CM then sends the fragment, without any piggyback request as in 5628 and 5630 to the CMTS 5042. The CM returns to processing MAP information elements in 5608 until it gets to the next grant. The CM then repeats the process of checking to see if the grant is large enough as in 5612. If the next grant is not large enough, the CM repeats the process of fragmenting the remaining packet data and, as in 5626, checking to see if it needs to send a piggyback request based on additional grants or grant pendings in the MAP. If the grant is large enough to transmit the rest of the packet as on 5614, the CM checks to see if there is another packet enqueued for this same SID. If so, the CM sends the remaining portion of the packet with the fragmentation header containing a piggyback request for the amount of time slots needed to transmit the next packet in the queue as on line 5620. The CM then returns to processing the MAP information elements. If there is not another packet enqueued for this SID, then the CM sends the remaining portion of the packet with fragmentation header containing no piggyback request as shown in 5618. The CM then returns to 5604 to await the arrival of another packet for transmission. When the CMTS 5042 partially grants the request from the CM 5046 in the first MAP 11 and fails to provide an additional grant or grant pending to the CM 5046 in the first MAP, the CM will not detect additional grants or grant pendings as on 5632. The CM 5046 then sends to the CMTS 5042 a fragment of the data packet and a piggyback request for the remainder as in 5634. When the CM has transmitted the fragment with the piggybacked request as shown on line 5638, the CM returns to processing MAP information elements as in 5608 while waiting for additional grants. When the CMTS receives the fragment with the piggybacked request, the CMTS must decide whether to grant the new request or send a partial grant based on the new request. This decision is based on the scheduling algorithms implemented on the CMTS.

Any time during the request/grant process, the CMTS could fail to receive a request or the CM could fail to receive a grant for a variety of reasons. As a fail safe mechanism, the CMTS places an acknowledgment time, or ACK time, in the MAPs it transmits. This ACK time reflects the time of the last request it has processed for the current MAP. The CM uses this ACK time to determine if its request has been lost. The ACK timer is said to have "expired" when the CM is waiting for a grant and receives a MAP with an ACK time later in time than when the CM transmitted its request. As the CM is looking for grants at 5610, if the ACK time has not expired as on 5644, the CM returns to processing the MAPs as in 5608. If the ACK timer does expire as on 55646, the CM checks to see how many times it has retried sending the request in 5648. If the number of retries is above some threshold, the retries have been exhausted as on 5654 and the CM tosses any untransmitted portion of the packet at 5656 and awaits the arrival of the next packet. If the ACK timer has expired and the number of retries have not been exhausted as in 5650, the CM uses a contention request region to transmit another request for the amount of time slots necessary to transmit the untransmitted portion of the packet as in 5652. The CM then returns to processing the MAPS.

Referring to FIG. 13, the CMTS 5042 includes a crystal oscillator timing reference 5016 which provides an output to a headend clock synchronization circuitry 5018. It is this timing reference 5016 to which each of the CMs 5046 must be synchronized. Headclock clock synchronization circuitry also receives an input from network clock reference 6003, which will be discussed in more detail below. The headend clock synchronization circuit 5018 is incremented by the output of the crystal oscillator timing reference 16 and maintains a count representative of the number of cycles provided by the crystal oscillator timing reference 5016 since the headend clock synchronization circuit 5018 was last reset. The headend clock synchronization circuit 5018 includes a free-running counter having a sufficient count capacity to count for several minutes before resetting.

A timebase message generator 20 receives the count of the headend clock synchronization circuit 5018 to provide an absolute time reference 5021 which is inserted into the downstream information flow 5022 provided by downstream data queue 5024, as discussed in detail below. The timebase message generator 5020 prefers a module function, i.e., a saw tooth pattern as a function of time) and the counter clock is generated by the oscillator with very tight accuracy.

Timing offset generator 5026 receives a ranging signal message 5027 from each individual CM 1046 with which the CMTS is in communication. The slot timing offset generator 26 provides a slot timing offset 5028 which is representative of a slot timing offset between the CMTS 5042 and the CM 5046 and inserts the slot timing offset 5028 into the downstream information flow 5022. The slot timing offset 5028 is calculated by determining the position of the slot timing offset from the expected time 5027 within a dedicated timing slot of the upstream communications, as discussed in detail below. The timing effort generator 5026 encodes the timing offset (ranging error) detected by the upstream receiver into a slot timing offset message. Slot timing offset messages are sent only after the frequency of the local reference clock has been acquired by the CM.

Downstream modulator 5030 primarily modulates the downstream information flow 5022. Absolute time references 5021 are inserted at quasi-periodic intervals as determined by a timestamp send counter. A slot timing offset message 5028 is inserted after measuring the slot timing error upon the arrival of a ranging signal message 5027.

The time line 5032 of the CMTS 5042 shows that the slot timing offset 5028 is the difference between the expected receive time and the actual receive time of the slot timing offset message 5027.

Each CM 5046 includes a downstream receiver 5034 for facilitating demodulation of the data and timestamp message, and timing recovery of downstream communications from the CMTS 5042. The output of the downstream receiver 5034 is provided to timebase message detector 36 and slot timing offset detector 5038. The downstream information (any data communication, such as a file transfer or MPEG video signal) received by the downstream receiver 5034 is also available for further processing, as desired.

The timebase-message detector 5036 detects the timebase message generated by timebase message generator 5020 of the CMTS 5042. Similarly, the slot timing offset detector 5038 detects the slot timing offset 5028 generated by the slot timing offset generator 5026 of the CMTS 5042. The timebase message detector 5036 provides an absolute time reference 5040 which is representative of the frequency of the crystal oscillator timing reference 5016 of the CMTS 5042. The absolute time reference 5040 is provided to a digital tracking loop 5042 which provides a substantially stable clock output for the CM 5046 which corresponds closely in frequency to the frequency of the crystal oscillator timing reference 5016 of the CMTS 5042. Thus, the digital tracking loop 5042 uses the absolute time reference 5050 5040, which is representative of the frequency of the crystal oscillator timing reference 5016, to form an oscillator drive signal which drives a numerically controlled oscillator 5044 in a manner which closely matches the frequency of the crystal oscillator timing reference 5016 of the CMTS 5042, as discussed in detail below.

A difference between the absolute time reference 5040 and the output of a local time reference 5046, which is derived from the numerically controlled oscillator 5044, is formed by differencing circuit 5048. This difference defines a frequency error value which represents the difference between the clock of the CM 5046 (which is provided by local time reference 5046) and the clock of the CMTS 5042 (which is provided by crystal oscillator timing reference 5016).

This frequency error value is filtered by loop averaging filter 5050 which prevents undesirable deviations in the frequency error value from affecting the numerically controlled oscillator 44 in a manner which would decrease the stability thereof or cause the numerically controlled oscillator 5044 to operate at other than the desired frequency. The loop filter 5050 is configured so as to facilitate the rapid acquisition of the frequency error value, despite the frequency error value being large, and then to reject comparatively large frequency error values as the digital tracking loop 5042 converges, i.e., as the output of the local timing reference 5046 becomes nearly equal to the absolute time reference 5040, thereby causing the frequency error value to approach zero.

An initial slot timing offset 5052 is added by summer 5054 to the output of the local time reference 5046 to provide a partially slot timing offset corrected output 5056. The partially slot timing offset corrected output 5056 of summer 5054 is then added to slot timing offset 5058 provided by slot timing offset detector 5038 to provide slot timing offset and frequency corrected time reference 60. The timing offset correction block is a simple adder which adds two message values. Such simplified operation is facilitated only when the resolution of the timing offset message is equal to or finer than that of the timestamp message.

The initial slot timing offset 5052 is merely an approximation of the expected slot timing offset likely to occur due to the propagation and processing delays, whose approximate values have been predetermined. After frequency conversion using the phase locked loop and timebase message error, the slot timing offset 58 provides a final correction which is calculated by the CMTS 5042 in response to the CMTS 5042 receiving communications from the CM 5046 which are not properly centered within their desired timing slots, as discussed in detail below.

Scaler 5062 scales the frequency corrected time reference 5060 so as to drive upstream transmitter 5069 at the desired slot timing.

Time reference 5064 is compared to the designated transmit time 5066 which was allocated via downstream communication from the CMTS 5042 to the CM 5046. When the time reference 5064 is equal (at point 5067) to the designated transmit time, then an initiate burst command 5068 is issued and the upstream data queue 5070 is modulated to form upstream transmission 5072.

The timing offset (error) message is generated by the CMTS. The timing offset (error) is simply the difference between the expected time and the actual arrival time of the ranging message at the CMTS burst receiver.

Still referring to FIG. 13, although only one CM 5046 is shown in FIG. 13 for clarity, the CMTS 5042 actually communicates bidirectionally with a plurality of such CMs 5012. Such communication as discussed herein may actually occur between the CM system and the plurality of CMs by communicating simultaneously with the CMs on a plurality of separate frequency channels. The present invention addresses communication of a plurality of different CMs on a single frequency channel in a serial or time division multiplexing fashion, wherein the plurality of CMs communicate with the CMTS sequentially. However, it will be appreciated that while this plurality of CMs is communicating on one channel with the CMTS (using time division multiple access or TDMA), many other CMs may be simultaneously communicating with the same CMTS on a plurality of different channels (using frequency division multiplexing/time division multiple access or FDM/TDMA).

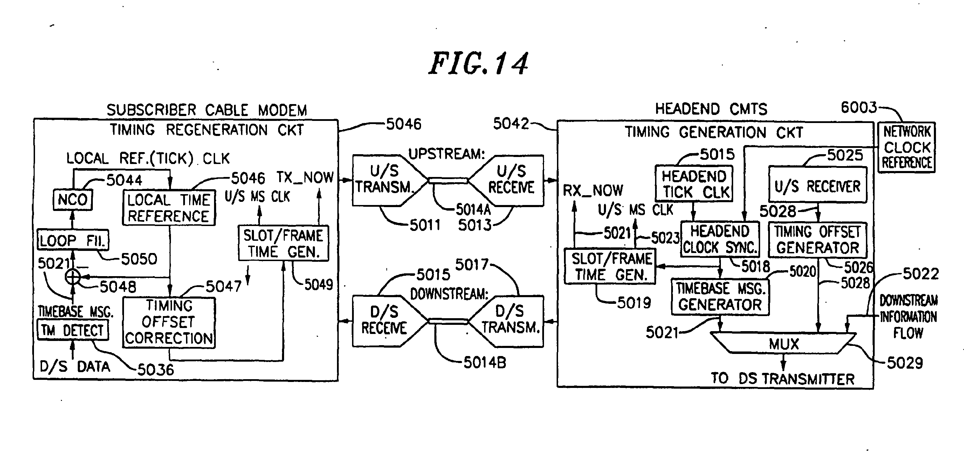

Referring now to FIG. 14, the CMTS 5042 and the CM 5046 are described in further detail. The multiplexer 5029 of the CMTS 5042 combines downstream information flow 5022 with slot timing offset 5028 from slot timing offset generator 5026 and with absolute time reference 5021 from timebase message generator 5020 to provide downstream communications to the downstream transmitter, which includes downstream modulator 5030 (FIG. 13). The slot timing offset generator 5026 receives a slot timing offset signal 5028 from the upstream receiver 5025. The location of the slot timing offset signal within a timing slot of an upstream communication defines the need, if any, to perform a slot timing offset correction. Generally, a slot timing offset value will be transmitted, even if the actual slot timing offset is 0. When the slot timing offset message is desirably located within the timing offset slot, and does not extend into guard bands which are located at either end of the timing offset slot, then no slot timing offset correction is necessary.

However, when the slot timing offset message extends into one of the guard bands of the timing offset slot of the upstream communication, then a slot timing offset 5028 is generated by the slot timing offset generator 5026, which is transmitted downstream to the CM 5046 where the slot timing offset 5028 effects a desired correction to the time at which upstream communications occur, so as to cause the slot timing offset message and other transmitted data to be positioned properly within their upstream data slots.

The headend tick clock 5015 includes the crystal reference 5016 of FIG. 13 and provides a clock signal to linear counting sequence generator 5018. Slot/frame time generator 5019 uses a clock signal provided by headend clock synchronization circuit 5018 to provide both an minislot clock 5021 and a receive now signal 5023. The upstream message clock 5021 is the clock by which the message slots are synchronized to effect time division multiple access (TDMA) communications from each CM 5046 to the CMTS 5042. A Transmit now signal is generated at the beginning of each minislot of a transmission. A Receive now signal is similarly generated at the beginning of a received packet.

A minislot is a basic medium access control (MAC) timing unit which is utilized for allocation and granting of time division multiple access (TDMA) slots. Each minislot may, for example, be derived from the medium access control clock, such that the minislot begins and ends upon a rising edge of the medium access control clock. Generally, a plurality of symbols define a minislot and a plurality of minislots define a time division multiple access slot.

The CM 5046 receives downstream data from the downstream channel 14B. A timebase message detector 5036 detects the presence of a timebase message 5021 in the downstream data.

Slot timing offset correction 5047 is applied to upstream communications 14A prior to transmission thereof from the subscriber CM 50046. The slot timing offset correction is merely the difference between the actual slot timing offset and the desired slot timing offset. Thus, the slot timing offset correction is generated merely by subtracting the actual slot timing offset from the desired offset. Slot/frame timing generator 5049 transmits the upstream data queue 70 (FIG. 13) at the designated transmit time 66 (FIG. 13).

Summer 48 subtracts from the timebase message 5021 of the local time reference 5046 and provides an output to a loop filter 5050 which drives numerically controlled oscillator 5044, as discussed in detail below.

Upstream transmitter 11 facilitates the transmission of upstream communications 14A from the subscriber CM 5046A and upstream receiver 13A facilitates the reception of the upstream communications 14A by the CMTS 5010.

Downstream transmitter 17 facilitates the transmission of downstream communications 14 from the CMTS 5016 to the CM 5046 where downstream receiver 5015 facilitates reception thereof.

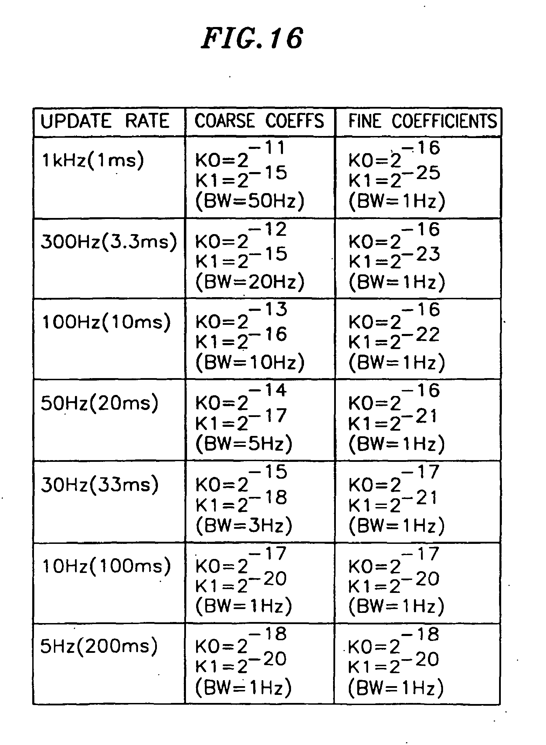

Referring now to FIG. 16, an exemplary timing recovery circuit of a CM is shown in further detail. Downstream demodulator 5095, which forms a portion of downstream receiver 5015 of FIG. 14, provides clock and data signals which are derived from downstream communications 14B (FIG. 14). The data signals include downstream bytes which in turn include the count or timestamp 5097 and timebase message header 5081 transmitted by the CMTS 5042. Slot timing offset messages are included in the downstream flow of downstream data.

Timestamp detector 5080 detects the presence of a timestamp header 5081 among the downstream bytes and provides a timestamp arrived signal 5082 which functions as a downstream byte clock sync. The timestamp arrived signal 5082 is provided to synchronizer 5083 which includes register 5101, register 5102, AND gate 5103, inverter 5104 and latch 5105. Synchronizer 103 synchronizes the timestamp arrived signal 82 to the clock of the CM 5046, to provide a data path enable tick clock sync 5107 for enabling the digital tracking loop 5042.

When the digital tracking loop 5042 is enabled by the data path enable tick clock sync 50107 output from the synchronizer 5083 in response to detecting a timestamp header by timestamp detector 5080, then the timestamp, which is a count provided by the headend clock synchronization circuit 5018 of FIG. 14, is provided to the digital tracking loop 5042 and the digital tracking loop 5042 is enabled so as to process the timestamp.

A differencing circuit or saturating frequency detector 5109 compares the timestamp to a count provided to the saturating frequency detector 5109 by timebase counter 5111 which is representative of the frequency of numerically controlled oscillator 5044. The saturating frequency detector 5109 provides a difference signal or frequency error value 5112 which is proportional to the difference between the frequency of the numerically controlled oscillator 5044 of the CM and the crystal oscillator reference 5016 of the CMTS.

If the difference between the value of the timestamp and the count of timebase counter 5111 is too large, indicating that the timestamp may be providing an erroneous value, then the saturating frequency detector 5109 saturates and does not provide an output representative of the difference between the value of the timestamp and the count of timebase counter 5111. In this manner, erroneous timestamps are not accepted by the digital tracking loop 5042.

Pass 5113 loop enable allows the difference provided by the saturating frequency detector 109 to be provided to latch 5115 when a global enable is provided thereto. The global enable is provided to zero or pass 5113 when functioning of the digital tracking loop 5042 is desired.

Latch 5115 provides the frequency error value 5112 to a loop filter which includes multipliers 5117 and 5119, scalers 5121 and 5123, summers 5124, 5125 and latch 5127.

The multipliers 5117 and 5119 include shift registers which effect multiplication by shifting a desired number of bits in either direction. Scalers 5121 and 5123 operate in a similar manner.

The loop filter functions according to well-known principles to filter out undesirable frequency error values, such that they do not adversely affect the stability or operation of numerically controlled oscillator 5044. Thus, the loop filter tends to smooth out undesirable deviations in the frequency error value signal, so as to provide a more stable drive signal for the numerically controlled oscillator 5044.

The multipliers 5117 and 5119 can be loaded with different coefficients such that the bandwidth of the loop filter may be changed from a larger bandwidth during initial acquisition to a smaller bandwidth during operation. The larger bandwidth used initially facilitates fast acquisition by allowing frequency error values having larger deviations to be accepted. As the digital tracking loop 5042 converges, the frequency error value tends to become smaller. At this time, frequency error values having larger deviations would tend to decrease stability of the digital tracking loop 5042 and are thus undesirable. Therefore, different coefficients, which decrease the bandwidth of the loop filter, are utilized so as to maintain stability of the digital tracking loop 5042.

A table showing an example of coarse and fine coefficients K0 and K 1 which are suitable for various different update rates and bandwidths are shown in FIG. 16.

The output of the loop filter is provided to latch 5131. The output of latch 5131 is added to a nominal frequency by summer 5133 so as to define a drive signal for numerically controlled oscillator 5044.

Those skilled in the art will appreciate that the addition of a frequency offset, if properly programmed to a normal frequency, will decrease the loop's acquisition time. This is due to the fact that the final value of the accumulator 5127 will be closer to its initial value.

The nominal frequency is generally selected such that it is close in value to the desired output of the numerically controlled oscillator 5044. Thus, when the numerically controlled oscillator 5044 is operating at the desired frequency, the filtered frequency error value provided by latch 5131 is nominally zero.

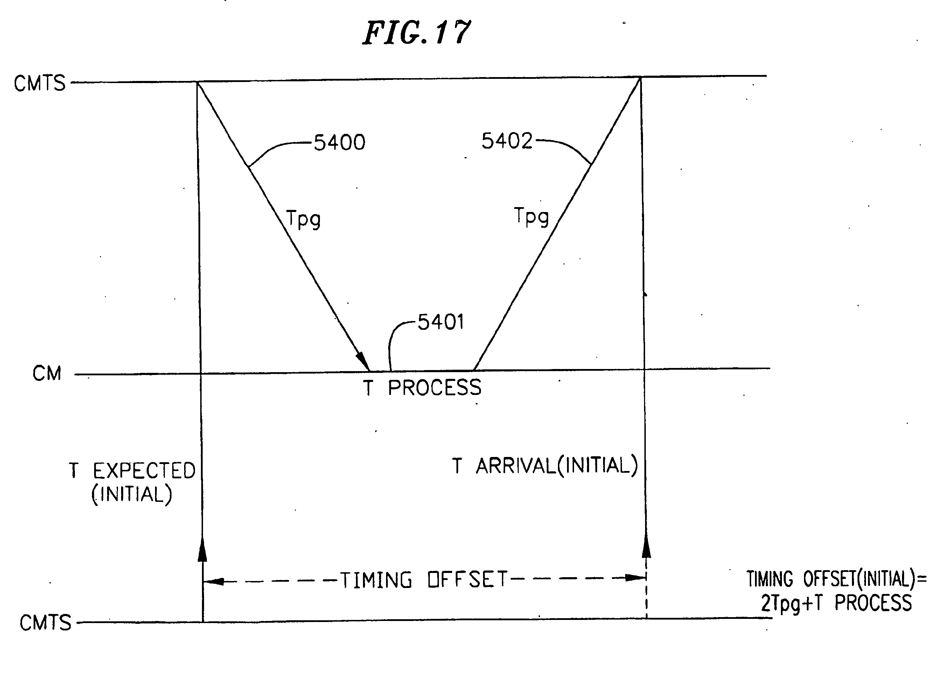

Referring now to FIG. 17, a slot timing offset between the clock of the CM 5046 and the clock of the CMTS 5042 must be determined so as to assure that messages transmitted by the CM 1046 are transmitted during time slots allocated by the CM system 5010. As those skilled in the art will appreciate, propagation delays 5400 and processing delays 5402 combine to cause the CM 5046 to actually transmit at a later point in time than when it is requested to do so by the CMTS 5042. Thus, a slot timing offset must be provided to each CM 5046, to assure that it transmits at the correct time. This slot timing offset is determined by the CMTS 5042 by having the CMTS 5042 monitor a dedicated slot timing offset slot in upstream communications so as to determine the position of a slot timing offset message therein. The position of the slot timing offset message within the dedicated slot timing offset slot in the upstream communication determines the slot timing offset between the clock of the CMTS 5042 and the clock of the CM 5046. Thus, the CMTS 5042 may use this error to cause the CM 5046 to transmit at an earlier point in time so as to compensate for propagation and processing delays. This slot timing offset correction is equal to 2Tpg + Tprocess:

Initially, the slot timing offset slot includes a comparatively large time slot, i.e., having comparatively large guard times, so as to accommodate comparatively large slot timing offset error. In a normal data packet, the width of the timing offset slot may be reduced when slot timing offset errors become lower (thus requiring smaller guard bands), so as to *facilitate* more efficient upstream communications.

Generally, communications will be initialized utilizing a comparatively large guard time. After acquisition, when slot timing accuracy has been enhanced, then the guard time may be reduced substantially, so as to provide a corresponding increase in channel utilization efficiency. Data packets are acquired rapidly, e.g., in an order of sixteen symbol or so, so as to facilitate enhanced efficiency of bandwidth usage. As those skilled in the art will appreciate, it is desirable to acquire data packets as fast as possible, so as to minimize the length of a header, preamble or other non-information bearing portion of the data packet which is used exclusively for such acquisition.

As used herein, acquisition is defined to include the modifications or adjustments made to a receiver so that the receiver can properly interpret the information content of data packets transmitted thereto. Any time spent acquiring a data packet detracts from the time available to transmit information within the data packet (because of the finite bandwidth of the channel), and is therefore considered undesirable.

Acquisition includes the performance of fine adjustments to the parameters which are defined or adjusted during the ranging processes. During the ranging processes, slot timing, carrier frequency, and gross amplitude (power) of the data packet are determined. During acquisition, these parameters are fine-tuned so as to accommodate fractional symbol timing, carrier phase correction and fine amplitude of the data packet.

Moreover, a ranging process is used to control power, slot timing and carrier frequency in the upstream TDMA channel. Power must be controlled so as to provide normalized received power at the CMTS, in order to mitigate inter-channel interference. The carrier frequency must be controlled so as to ensure proper channelization in the frequency domain. Slot timing must be controlled so as to mitigate the undesirable collision of data packets in the time domain and to account for differential propagation delays among different CMs.

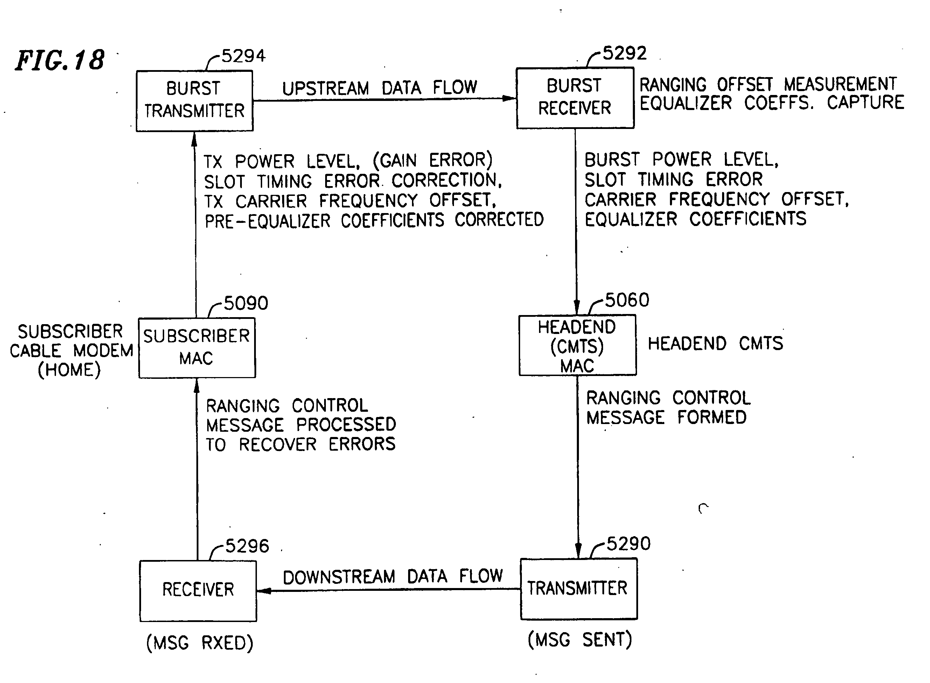

Referring now to FIG. 18, the CMTS 5042 comprises a burst receiver 5292 for receiving data packets in the upstream data flow, a continuous transmitter 5290 for broadcasting to the CMs 5046 via the downstream data flow and a medium access control (MAC) 5060 for providing an interface between the burst receiver 5292, the continuous transmitter 5290 and other headend communications devices such as video servers, satellite receivers, video modulators, telephone switches and Internet routers 5018 (FIG. 5).

Each CM 5046 (FIG. 5) comprises a burst transmitter 5294 for transmitting data to the CMTS 5042 via upstream data flow, a continuous receiver 5296 for receiving transmissions from the CMTS 5042 via the downstream data flow and medium access control (MAC) 5090 for providing an interface between the burst transmitter 5294, the continuous receiver 5296 and subscriber communications equipment such as a PC 5048 (FIG. 5), a telephone, a television, etc.

The burst receiver 5292, medium access control (MAC) 5060 and continuous transmitter 5290 of the CMTS 5042 and the burst transmitter 5294, medium access control (MAC) 5090 and continuous receiver 296 of each CM may each be defined by a single separate, integrated circuit chip.

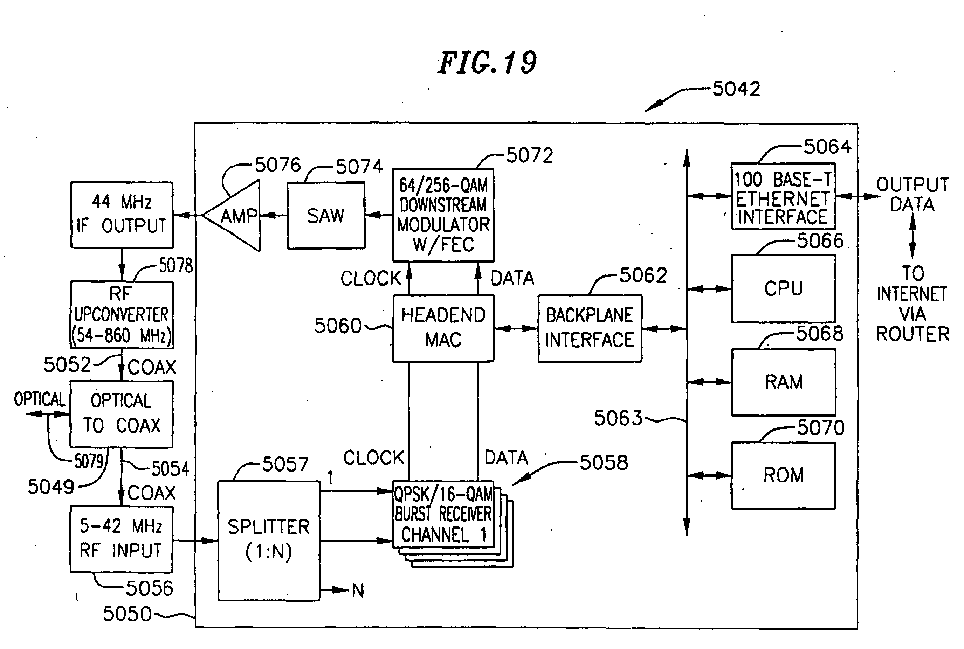

Referring now to FIG. 19, the CMTS 5042 of FIG. 5 is shown in further detail. The CMTS 5042 is configured to receive signals from and transmit signals to an optical fiber 5079 of the HFC network 5010 (FIG. 5) via optical-to-coax stage 5049, which is typically disposed externally with respect to the CMTS 5042. The optical-to-coax stage 5049 provides an output to the 5-42 MHz RF input 56 via coaxial cable 54 and similarly receives a signal from the RF up converter 5078 via coaxial cable 5052.

The output of the RF input 5056 is provided to splitter 5057 of the CMTS 5042, which separates the 5-42 MHz RF input into N separate channels. Each of the N separate channels is provided to a separate QPSK/16-QAM burst receiver channel 5058.

Each separate QPSK/16-QAM burst receiver channel 5058 is in electrical communication with the headend MAC 5060. The headend MAC 5060 is in electrical communication with backplane interface 5062 which provides an interface to ROM 5070, RAM 5068, CPU 5066, and 100BASE-T Ethernet interface 5064. The headend MAC 5060 provides clock and a data output to the downstream modulator 5072 which provides an output to amplifier 5076 through surface acoustic wave (SAW) filter 74. Amplifier 5076 provides an output to 44 MHz IF output, which in turn provides an output to the RF upconverter 5078.

Each burst receiver 5058 is configured so as to be capable of receiving both QPSK (4-QAM) or 16-QAM signals. The QPSK signals provide 2 bits per symbol, wherein each bit has ±1 amplitude levels. The 16-QAM signals provide 4 bits per symbol, each bit having a ±1 or ±3 amplitude level.

However, the description and illustration of a burst receiver configured to accommodate QPSK and 16-QAM inputs is by way of illustration only and not by way of limitation. Those skilled in the art will appreciate that other modulation techniques, such as 32-QAM, 64-QAM and 256-QAM may alternatively be utilized.

### Sample and Packet Synchronization

In addition to the above-mentioned standard request / grant processing, the well-known Data over Cable Service Interface Specifications (DOCSIS)provide for an Unsolicited Grant mode. In accordance with this mode, a fixed number of mini-slots are granted to a selected SID without having to suffer the delay of having a steady stream of requests prior to receipt of corresponding grants. Upstream bandwidth is allocated in discrete blocks at scheduled intervals. The block size and time interval are negotiated between the CM and the CMTS. In other words, given an initial request, the CMTS schedules a steady stream of grants at fixed intervals. The beginning mini-slot of these unsolicited grants will begin a fixed number of mini-slots from the end of the last similar grant. This mechanism can thereby provide a fixed bit rate stream between the CM and CMTS which is particularly useful for packet voice systems which sample the voice at a fixed interval (8kHz) and assemble a fixed length packet for transport. Such fixed sampling and fixed length packet processing make the use of such fixed grant intervals particularly attractive.

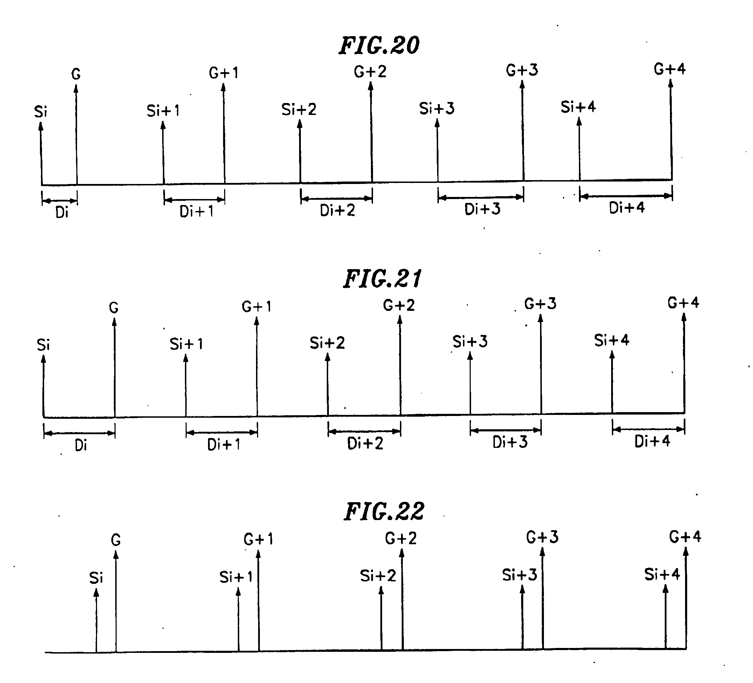

However, if voice samples are collected using an asynchronous clock with respect to the clock associated with the mini-slots, packets will arrive at an arbitrary time with respect to the burst. The time difference (D) between the burst and packet arrival will continuously vary from burst to burst as a function of the difference between the sample and mini-slot clock frequency. FIG. 20 shows the variable delays that result when such voice services are transmitted using the DOCSIS Unsolicited Grant mode. Sample packets (Si, Si+1, ... ) arrive based upon the sample clock and upstream grants (G, G+1, ...) arrive based upon the network clock derived from the CMTS network clock. The delay (Di, Di+1, ...) between the sample packet available and the grant arrival varies with every packet as a function of the difference between the sample and network clocks.

However, DOCSIS systems generate a clock used to synchronize the upstream transmission functions. A protocol is defined that provides a synchronized version of the CMTS clock at each CM modem, as has been described in detail hereinabove. A protocol can also be defined that provides synchronization between the voice sample clock and the CM. Similarly, when the Headend communicates with the PSTN through a PSTN Gateway which has its own clocking, a protocol can also be defined that provides synchronization between the PSTN and the Headend. Accordingly, synchronization can then be provided such that the caller voice sampling is synchronized with the CM, which, in turn, is synchronized with the CMTS, which, in turn, is synchronized with the PSTN, ultimately allowing the called destination to be synchronized with the caller. The present invention provides such synchronization.

Referring to FIG. 21 there is depicted as in FIG. 20, a series of grants (G, G+1,...) and a series of voice samplings (Si, Si+1,...) wherein the delays (Di, Di+1, ...) between the sample packet arrival and the unsolicited grant arrival is fixed. The fixed delay is a result of synchronization between the CM and the local telephone system as hereinbelow described. The fixed delay is arbitrary and is determined by the random relationship between the start of the call event and the grant timing. It is desirable, however, to minimize the delay between the packet arrival and the grant arrival as set forth in FIG. 22.

A coordination is provided between the grant arrival processing and the packet arrival assembly processing to help minimize such delay.

The arrival of the grant signal at the CM indicates that "it now is the time for the CM to send the data". Therefore, when the grant arrives the data must be ready for transmission. To prepare data ready for transmission time is needed for both data collection (sampling of the voice) and processing of the collected data (e.g.,providing voice compression). To minimize delay the data for transmission should be ready to transmit just before the grant arrives. Delay occurs if the data collection and processing of the collected data finishes too early and the system has to wait for the grant to arrive. Such a delay can be particularly troublesome for Voice over IP processing which has certain maximum delay specification requirements. Therefore, it is advantageous for the system to know how much time is necessary to collect the data, to know how much time is necessary to process the data, and thereby be able to synchronize such data collection and processing with the grant.

The downstream CM negotiates a grant period with the CMTS as has been hereinabove described. An Unsolicited Grant interval is set by the CMTS, e.g., at 10 ms intervals. Once the grant is established based upon a request (e.g., a signal being sent by a caller telephone that a telephone call is desired to be made on an open telephone channel to a call recipient, such as a used connected to the PSTN), the Unsolicited Grant will be provided, namely, the grant will come at regular intervals. The Unsolicited Grant mode is utilized because the voice transmission is continual during the telephone call and is being collected continuously during every grant interval (e.g., every 10 ms). The grant intervals can be considered to be "windows" to transmit the sampled packets of data being collected. However, if the data collection and processing is not synchronized it will not be ready at regular intervals, creating both transmission delay and, in turn, end point (i.e., the call recipient) reception delay.

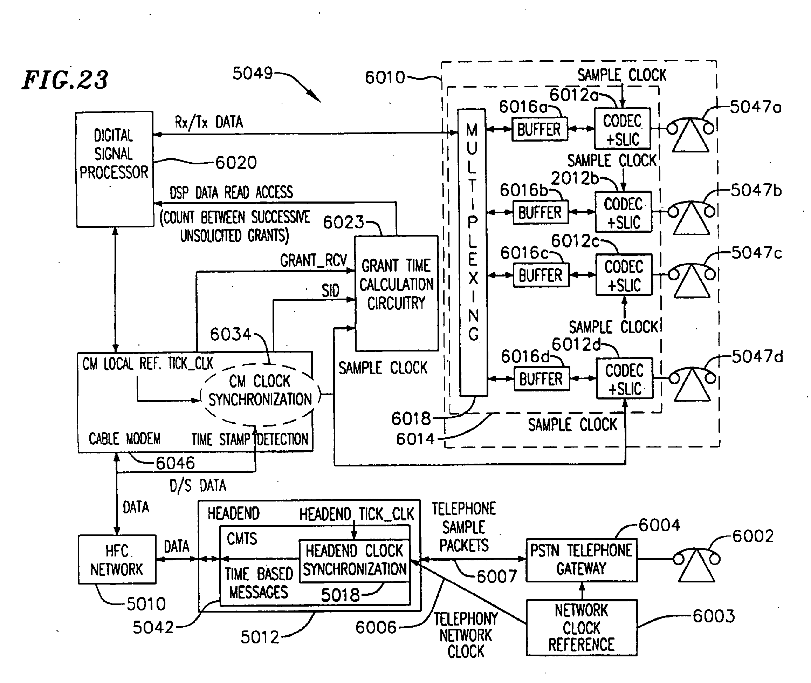

Referring to FIG. 23, there is depicted a representative embodiment of an implementation of the present invention wherein a local caller can place a call, over a CM /CMTS system, to a call recipient 6002 connected to the PSTN through PSTN gateway 6004. In the representative embodiment, four caller telephones 1047a, 1047b, 1047c, 1047d for part of an analog to digital signal processing system 6010, which is well known to those skilled in the art. Each caller telephone is connected to respective standard code / decode (CODEC) and subscriber loop interface circuits (SLIC), 6012a, 6012b, 6012c, 6012d, which are part of a transmit analog-to-digital (A/D) and receive digital-to-analog (D/A) converter sub-system 6014, which also includes respective buffers 6016a, 6016b, 6016c and 6016d for storing the digital sampled data, and multiplexer/demultiplexer 6018. Converter sub-system 6014 interfaces with a Digital Signal Processor (DSP) 6020, such as LSI Logic Corporation model ZSP56402. DSP 6020 controls signal compression. For example, for transmission, when a caller (e.g., caller 5047a) picks up a telephone receiver and talks, in practice the voice is sampled the converted from analog to digital signals. The DSP controls the compression of the data, which is packetized and transmitted under the control of CM 5046 from CM 5046 to CMTS 5042 as hereinabove described. Similarly, for reception, an incoming digital signal gets received and depacketized under the control of CM 1046 and decompressed under the control of the DSP. The resulting digital signals then get converted to analog signals for listening to by the caller.

When a telephone call is to be made through the CM, the telephone being picked up causes a message to be sent to the CMTS requesting an unsolicited grant, e.g., a periodic grant at a 10ms grant period. Voice data is then collected and processed during every 10ms interval between grants. The processing involves the DSP taking the digital signal from the converter sub-system and compressing the digital data (e.g., via an ITU standard G.729 algorithm coder) to enable the use of less bandwidth to transmit. The A/D conversion of a sequence of samples and their buffer storage can be considered the "data collection" aspect. The processing of the collected data has a time established by the compression algorithm chosen. Table 1 below depicts DSP processing time given a 10ms data collection frame size for various ITU compression algorithms using a typical DSP e.g., LSI Logic Corporation model ZSP16402 140 MHz DSP.

**TABLE 1**

| Compression | DSP Processing Time |
|---|---|
| (a) G. 711 | 2 MIPS = 1.4% DSP load = 0.0282 ms |
| | to process 2.0 ms of data |
| (b) G.722 | 16 MIPS = 11.4% DSP load = 0.228 ms |
| | to process 2.0 ms of data |
| (c) G.726 | 16 MIPS = 11.4% DSP load = 0.228 ms |
| | to process 2.0 ms of data |
| (d) G.728 | 35 MIPS = 25% DSP load = 0.5 ms |
| | to process 2.0 ms of data |
| (e) G.729 | 20 MIPS = 14.29% DSP load = 1.1 ms |
| | to process 2.0 ms of data |

Therefore, for G.711 compression, for example, 2.0ms of data collection time plus 0.0282ms of data processing time, i.e., 2.0282ms, is needed to make the collected and processed data ready just prior to the grant arrival. As such, the data collection must be started at 2.0282ms before the grant arrives and data collection must be finished prior to 0.0282 ms before the grant arrives. In other words, given the grant arrival schedule and the DSP processing time required based upon the compression chosen, clock synchronization between the grant arrival schedule and the data collection deadline is established. To ensure that the data collection deadline is met a clock for the A/D conversion is derived based upon the clocks of the CMTS and CM system and a pointer is provided to indicate a cutoff portion of the buffer in which the sampled data is being collected.

In accordance with the present invention data to be collected (sampling) is based upon the CMTS clock sent from the CMTS synchronizing the CMs. Grant time calculation circuitry 6022 interfaces between DSP 6020 and CM 5046. Collected data is taken from the respective buffer to include data stored in the buffer which was accumulated for a period before grant arrival, namely the processing time plus the data collection time. The CODEC/SLIC has clock to collect the data. The voice sampling is thereby clocked based upon a sample clock signal from the CM. As such, the most recent data stored in the buffer just before the grant arrival is used for transmission pursuant to the grant. The details of the sample clocking are set forth below.

Briefly referring back to FIG. 23, call recipient 6002 is connected to the PSTN over well-known PSTN telephone gateway 2004. PSTN telephone gateway 6004 is clocked by a telephony network clock signal 6006 from network clock reference 6003 which is also coupled to CMTS 5042 such that PSTN telephone gateway 6004 can be synchronized with the CMTS clock for the transfer of telephone sample packets 6007 between CMTS 5042 and PSTN telephone gateway 6004. The telephony network clock is the well known Building Integrated Timing Supply (BITS) clock. The equipment requirements for interfacing to this clock are known to those skilled in art and are described in Bellcore document TR-NWT-001244. The concept for intraoffice synchronization is also known to those skilled in the art and is described in Bellcore document TA-NWT-000436. The CMTS clock is synchronized with the telephony network clock signal 2006 via headend clock synchronization which utilizes headend reference tick clock 5015, as described above with respect to FIG. 14.

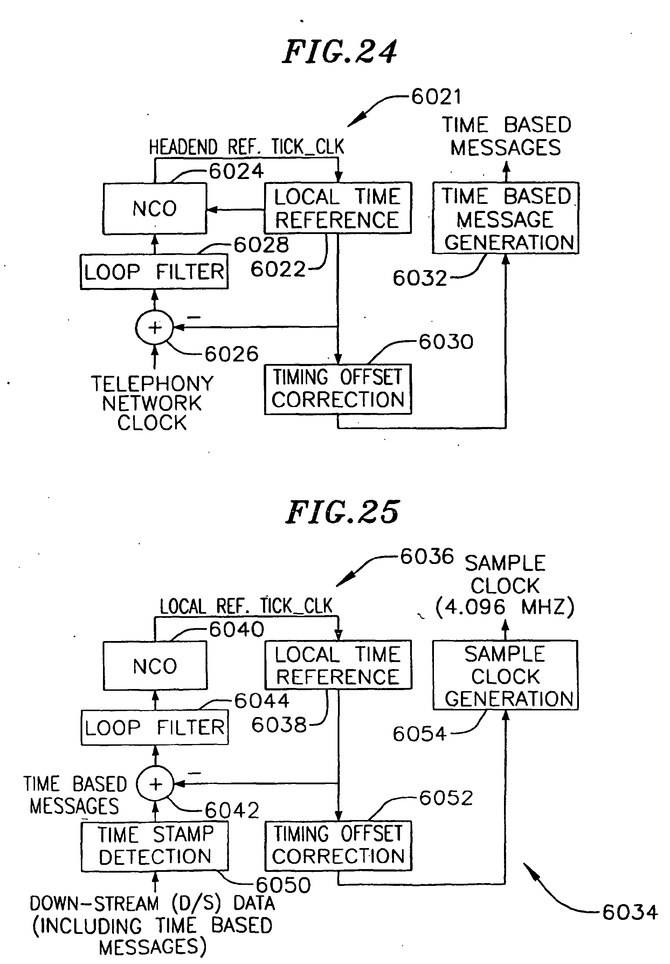

Referring now to FIG. 24, the operation of headend clock synchronization circuit 5018 is further described in conjunction with the telephony network clock. Digital tracking loop 6021 is a substantially stable clock output for the CMTS 5042. A difference between an absolute time reference and the output of a local time reference 6022, which is derived from the numerically controlled oscillator 5024, is formed by differencing circuit 6026. This difference defines a frequency error value which represents the difference between the clock of the CMTS 5042 (which is provided by local time reference 6022) and the clock of the PSTN Telephone Gateway 5004 (which is provided by telephony network clock signal 6006). This frequency error value is filtered by loop averaging filter 6028 which prevents undesirable deviations in the frequency error value from affecting the numerically controlled oscillator 5024 in a manner which would decrease the stability thereof or cause the numerically controlled oscillator 5024 to operate at other than the desired frequency. The loop filter 5028 is configured so as to facilitate the rapid acquisition of the frequency error value, despite the frequency error value being large, and then to reject comparatively large frequency error values as the digital tracking loop 6021 converges, i.e., as the output of the local timing reference 6022 becomes nearly equal to the absolute time reference, thereby causing the frequency error value to approach zero. Timing offset correction 2030 is a simple adder coupled to local time reference 6022 to time based message generator 2032 which provides time based messages as output. The CMTS clock is now synchronized with the PSTN Gateway clock.

Referring again briefly back to FIG. 23, it is noted that grant time calculation circuitry 6023 and CODEC + SLICs 6012a, 6012b, 6012c, 6012d are responsive to a sample clock signal from CM clock synchronization circuitry 2034 of CM 5046. Such sample clock signal provides the clocking synchronization for the voice sampling at 8KHZ derived from 4.096 MHz CM clock (which is synchronized with the CMTS clock, which is, in turn, synchronized with the PSTN clock.

Referring now to FIG. 25, the operation of CM clock synchronization circuit 6034 is described. The operation of CM clock synchronization circuit 6034 is similar to that of headend clock synchronization circuitry 6008. Time stamp detector 6050 detects downstream data including the timebase messages generated by timebase message generator 6032 of the CMTS 1042. Timebase message detector 6050 provides an absolute time reference which is representative of the frequency of the crystal oscillator timing reference 5016 of the CMTS 5042. Digital tracking loop 6036 is included to provide a substantially stable clock output. A difference between an absolute time reference and the output of a local time reference 6038, which is derived from the numerically controlled oscillator 6040, is formed by differencing circuit 6042. This difference defines a frequency error value. This frequency error value is filtered by loop averaging filter 6044 which prevents undesirable deviations in the frequency error value from affecting the numerically controlled oscillator 6040 in a manner which would decrease the stability thereof or cause the numerically controlled oscillator 6040 to operate at other than the desired frequency. The loop filter 6044 is configured so as to facilitate the rapid acquisition of the frequency error value, despite the frequency error value being large, and then to reject comparatively large frequency error values as the digital tracking loop 6036 converges, i.e., as the output of the local timing reference 6038 becomes nearly equal to the absolute time reference, thereby causing the frequency error value to approach zero. Timing offset correction 6052 is a simple adder coupled to local time reference 603 8 to feed sample clock generator 6054 which provides a 4.096 MHZ SAMPLE CLOCK for use by grant time calculation circuitry 6023 and CODEC + SLICs 6012a, 6012b, 6012c, 6012d.

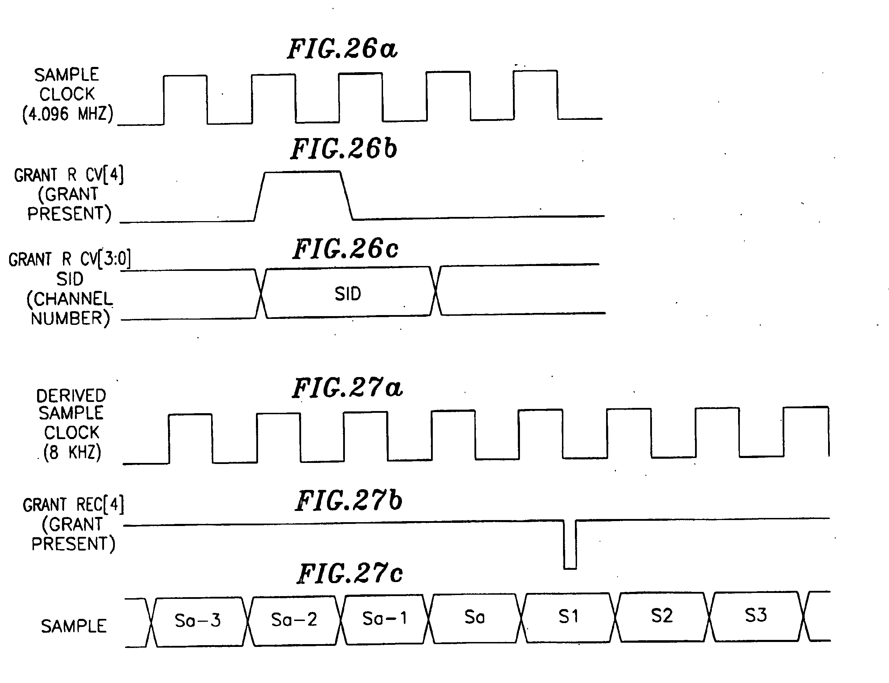

Referring now to FIGS. 26a, 26b and 26c there is respectively depicted the 4.096 MHz sample clock generated, a GrantRcv[4] (i.e., a grant present indication) and a GrantRcv[3:0] SID (i.e., a channel number on which the grant is present.

Referring now to FIGS. 27a, 27b, and 27c there is respectively depicted the derived 8 KHz sample clock for voice sampling, the grant Rcv [4] (in a scaled down depiction) and the sampled data.

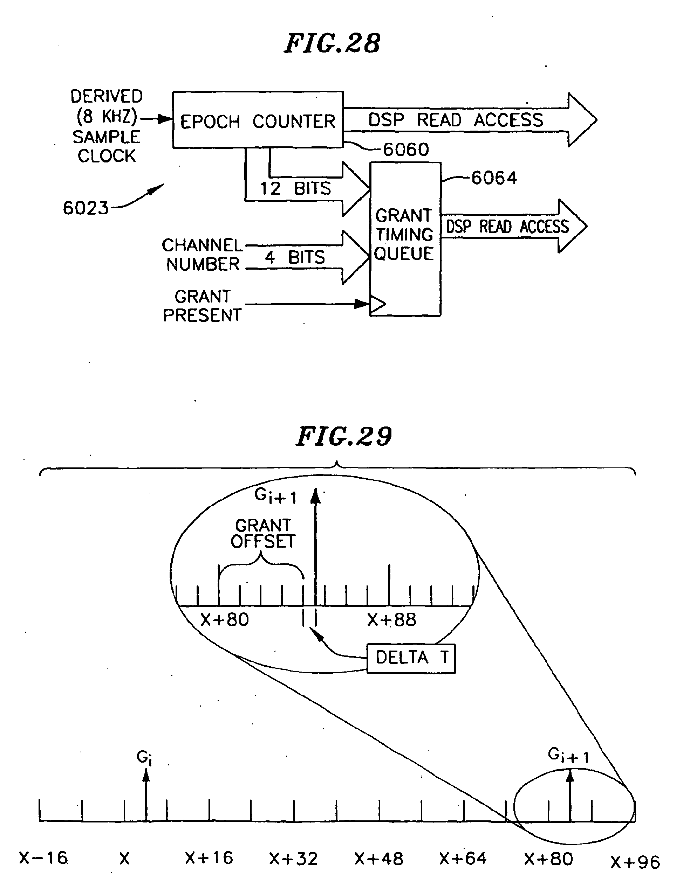

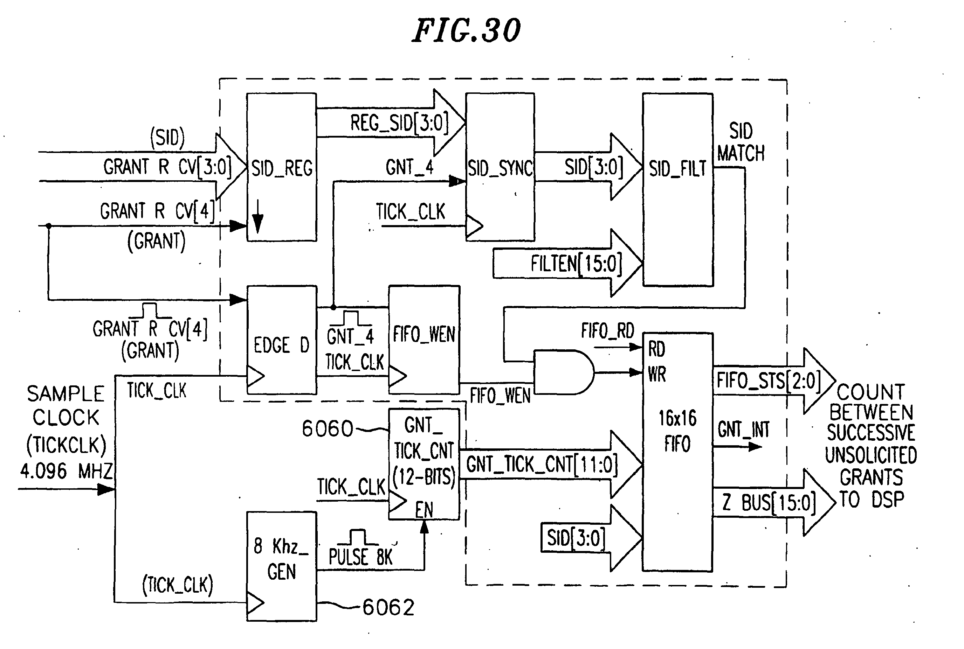

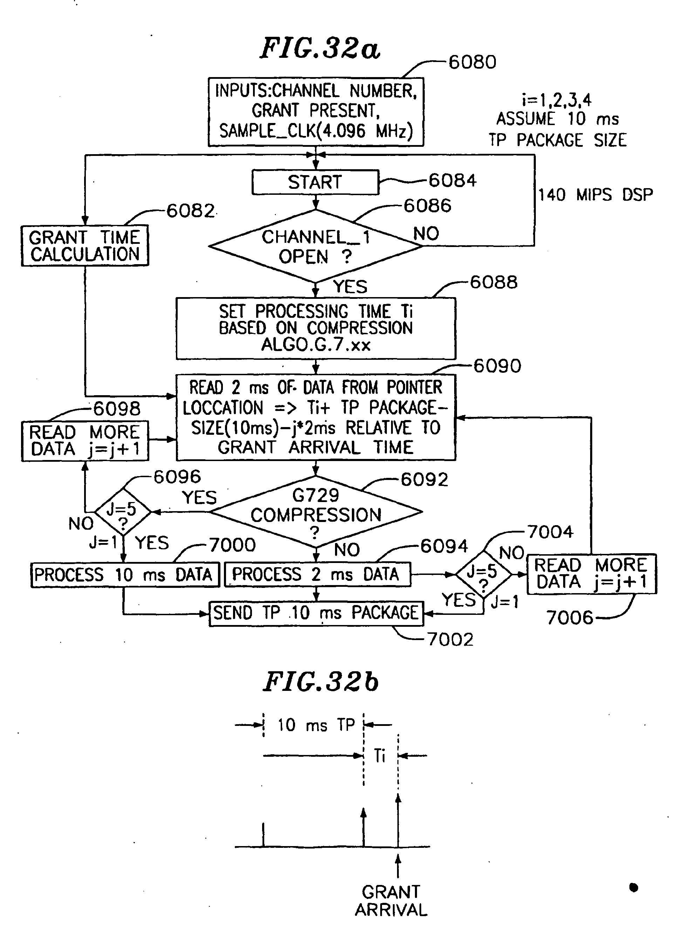

Referring to 8S. 27, 29 and 30, grant time calculation circuitry 6023 is shown in more detail. Epoch counter 6060 is pulsed by an 8KHz pulse generated by pulse generator 6062 derived from the 4.096 MHz sample clock produced by CM clock synchronization circuitry 6034 in CM 1046.Grant timing queue 6064 is responsive to the 4 bit SID channel number and grant present signal as shown in FIGS. 26a, 26b and 26c. The grant time calculation circuitry interfaces to DSP 6020 and counts between successive Unsolicited Grants. The epoch counter is a 12 bit counter and is advanced by the 4.096 MHz sample clock with 8 khz enable pulse. The grant arrival timing queue is latched by the grant present signal from the CM 5046. This signal is present whenever a grant of interest is present on the upstream. The grant timing queue accepts a 16 bit input, 4 bit of which are the hardware queue number associated with the grant present signal and 12 bit are the Epoch counter value. The DSP can read the current epoch counter value. The result of grant time calculation by grant time calculation circuitry 2023 is the production of a historical map of when grants arrive with respect to the epoch counter value as shown in FIG. 29. Referring more particularly to FIG. 30, grant timing queue 2064 includes logic block SID_REG, SID_SYNC and SID_FILT for capturing SID information. A 16x16 FIFO stores the tick count for each respective grant and its corresponding SID. Each entry in the FIFO contains the SID and gnt_tick_cnt corresponding to the grant arrival. This information allows DSP software to build a table of SIDs and gnt_tick_cnts which allows calculation of an average inter-arrival time for each grant. This information allows the software to then schedule the data processing as shown and described in more detail below with respect to FIG. 32a to ensure having packets ready in time for the grants.

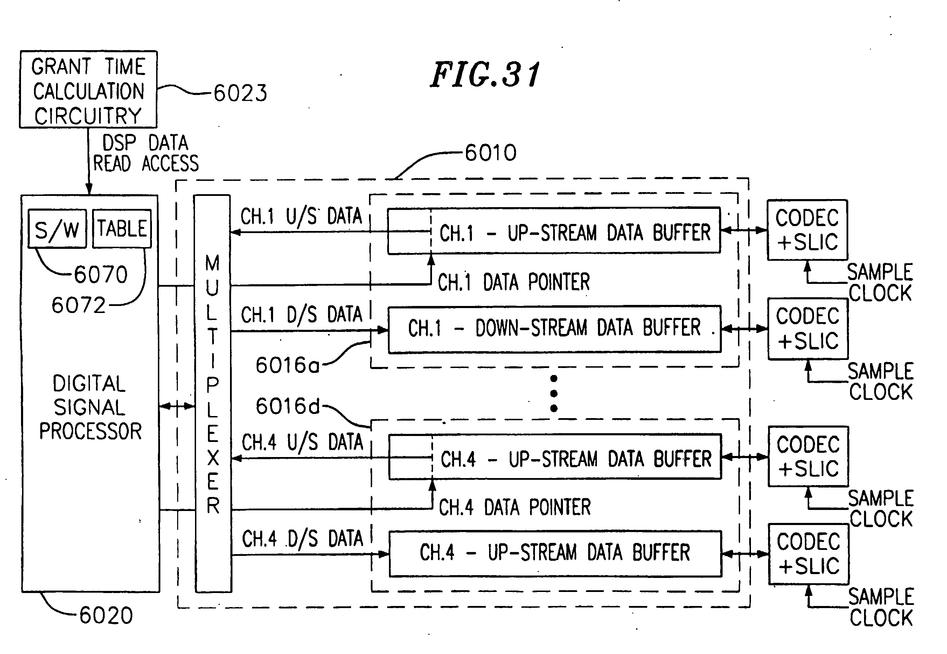

Referring to FIG. 31, the inter-relationship between grant time calculation circuitry 2023, DSP 2020 and buffers 2016a,... 2016d are shown in more detail. As indicated above, grant time calculation circuitry 2023 provides DSP Data Read Access information (SID and gnt_tick_cnts) to DSP 2020. This DSP Data Read Access information provides the timing information to the DSP so that it will know when and where to read the upstream data from the upstream data buffer. It also provides timing information as to when to place the downstream uncompressed voice data into the down stream data buffer. This timing information allows software 2070 for DSP 2020 to build a table 2072 of SIDs and grant tick counts, calculate an average inter-arrival time for each grant, schedules the data processing, and controls data transfers into and out of the data buffers.

As seen in FIG. 31, representative buffer 2016a (e.g., SID/Channel 1) and buffer 2016d (e.g., SID / channel 4) include both an upstream data buffer and a downstream data buffer, each having its respective CODEC/SLIC and clocked by the Sample Clock as described hereinabove. When sampled voice packet data is to be sent along Channel 1, in response to a grant, a Channel 1 data pointer under the control of DSP 6020 utilizes the grant time calculation information from grant time calculation circuitry 6023 to identify from where in the upstream data buffer the most current sampled data is to be taken and transmitted to CM 5046, the not-as-current samples beyond the pointer (i.e., stored earlier in the buffer for Channel 1) is discarded. Similarly, when sampled voice packet data is to be sent along Channel 4, in response to a grant, a Channel 4 data pointer under the control of DSP 6020 utilizes the grant time calculation information from grant time calculation circuitry 6023 to identify from where in the upstream data buffer the most current sampled data is to be taken and transmitted to CM 5046, the not-as-current samples beyond the pointer (i.e., stored earlier in the buffer for Channel 4) is discarded. The selected sampled voice packet data is then transmitted to CM 5046 by DSP 6020 for transmission to CMTS 5042 as hereinabove described.

Referring to FIGS. 32a and 32b an operational flow chart is provided showing DSP system software decision implementation in accordance with the present invention.

Consider a system where DSP 6020 is a 140 MIPS digital signal processor, such as LSI Logic Corporation model ZSP 16402, the transport package (TP) package size is 10ms, i.e., the voice package size in milliseconds within each grant interval that is being transmitted to/from the telephone, and the data processing involves voice compression selected from Table I set forth above where the data processing time needed before grant is 2ms for those compression algorithms other than G.729 wherein the time needed is 10ms. In other words, referring back to Table 1, for each 2.0ms, the DSP must encode and decode 4 channels of data while the 10 ms is used for the signaling of a TP package transmission. The far-end voice and the near end voice are synchronized via the sample clock. It should be noted, for example, that it would take 100% of the DSP load to process 4 channels of G.728 for the 140 MIPS DSP.

Referring back to FIG. 32a, at stage 6080, inputs as to Channel Number initiating a request, corresponding grant present and sample clock from cable modem 5010 are provided for grant time calculation 6082 and channel assessment start 6084 by the DSP software. A particular channel open, i.e., channel i = 1, 2, 3, or 4, is determined at stage 6086. If no, the processing begins again, if yes, processing time Ti, as seen in FIG. 32b, is set at stage 6088 based upon the compression algorithm chosen. At stage 6090, upon the grant time calculation receipt by the DSP, 2ms of data from the pointer location in the corresponding buffer associated with the open channel is read. For those algorithms with 2ms processing time, five processing cycles, having aj index going from 1 to 5, is needed. For the G.729 algorithm a 2ms processing time cannot be used since the uncompressed voice data is only available at 10ms frame-size. As such, at stage 6092 a determination as to G.729 is made, and if the determination is no 2ms of data is processed at stage 6094. If there is G.729 compression, the cycle index j is determined at stage 6096, and if, no more data is read incrementally j= j+1 at stage 6098. Once j=5 at stage 6096, 10ms of data is processed at stage 7000 and the 10 ms package is then transmitted at stage 7002 pursuant to the current grant arrival. Similarly to the j indexing for data read, a j indexing is performed for data processing at stages 7004 and 7006. Once the processing index j=5 at stage 7s004, where the 5 2ms iterations have been completed, the 10 ms package is sent at stage 7002.

Those skilled in the art will appreciate that alternative embodiments to that which has been described herein can be implemented.

## Claims

1. A communications system, comprising:
a cable modem termination system (4010) coupled to a first network by a gateway (3050), the first network including a first telephone (3001);
further comprising a cable modem (4300) coupled to the cable modem termination system (4010); and
comprising a second network coupled to the cable modem (4300), the second network including a second telephone (4002) which communicates with said first telephone (3001),
the communications system being **characterized by** further comprising
a clock (3040) external to the cable modem termination system (4010), the cable modem termination system (4010), the gateway (3050), and the cable modem being synchronized to the external clock (3040).

2. The communications system of claim 1 wherein the cable modem (4300) is synchronised to the cable modem termination system (4010).

3. The communications system of claim 2 wherein the second device is synchronised to the cable modem (4300).

4. The communications system of claim 1 further comprising a public switched telephone network (3000), the external clock (3040) being synchronised to the public switched network (3000).

5. The communications system of claim 4, wherein the gateway (3050) is coupled between the public switched telephone network (3000) and the cable modem termination system (4010).

6. The communications system of claim 5 wherein the first network is **characterised by** a global wide area network.

7. A method of communications within a system comprising a cable modem termination system (4010) coupled to a first network by a gateway (3050), a clock (3040) external to the cable modem termination system (4010), a cable modem (4300) and a second network coupled to the cable modem (4300), the method comprising:
exchanging data or voice between the cable modem termination system (4100) and the cable modem (4300),
**characterized in that** the method further comprises
synchronizing the cable modem termination system (4010), the gateway (3050) and the cable modem (4300) to the external clock (3040).

8. The method of claim 7 further comprising exchanging the data or voice between the cable modem (4300) and the second network, the second network including a device, and synchronising the device to the cable modem (4300).

9. The method of claim 7 further comprising synchronising the external clock (3040) to a public switched telephone network (3000).

10. The method of claim 10 further comprising exchanging the voice or data between the gateway (3050) and the cable modem termination system (4010).

## Patentansprüche

1. Kommunikationssystem, das umfasst:
- ein Kabelmodemanschlusssystem (4010), das über ein Gateway (Protokollumsetzer) (3050) an ein erstes Netzwerk angeschlossen ist, wobei das erste Netzwerk ein erstes Telefon (3001) umfasst,
- das ferner ein Kabelmodem (4300) umfasst, welches an das Kabelmodemanschlusssystem (4010) angeschlossen ist, und
- das ein zweites Netzwerk umfasst, welches an das Kabelmodem (4300) angeschlossen ist, wobei das zweite Netzwerk ein zweites Telefon (4002) umfasst, das mit dem ersten Telefon (3001) kommuniziert,
- wobei das Kommunikationssystem **dadurch gekennzeichnet ist, dass** es ferner umfasst:
- eine von dem Kabelmodemanschlusssystem (4010) externe Uhr (3040),
wobei das Kabelmodemanschlusssystem (4010), das Gateway (3050) und das Kabelmodem mit der externen Uhr (3040) synchronisiert sind.

2. Kommunikationssystem nach Anspruch 1,
wobei das Kabelmodem (4300) mit dem Kabelmodemanschlusssystem (4010) synchronisiert ist.

3. Kommunikationssystem nach Anspruch 2,
wobei das zweite Gerät mit dem Kabelmodem (4300) synchronisiert ist.

4. Kommunikationssystem nach Anspruch 1,
das ferner ein öffentliches Telefonnetz (public switched telephone network) (3000) umfasst, wobei die externe Uhr (3040) mit dem öffentlichen Telefonnetz (3000) synchronisiert ist.

5. Kommunikationssystem nach Anspruch 4,
wobei das Gateway (3050) zwischen dem öffentlichen Telefonnetz (3000) und dem Kabelmodemanschlusssystem (4010) angeschlossen ist.

6. Kommunikationssystem nach Anspruch 5,
wobei das erste Netzwerk durch ein globales Weitverkehrsnetz (globales WAN) **gekennzeichnet** ist.

7. Verfahren zur Datenübertragung in einem System,
das ein über ein Gateway (3050) an ein erstes Netzwerk angeschlossenes Kabelmodemanschlusssystem (4010), eine von dem Kabelmodemanschlusssystem (4010) externe Uhr (3040), ein Kabelmodem (4300) und ein an das Kabelmodem (4300) angeschlossenes zweites Netzwerk umfasst, wobei das Verfahren umfasst:
- Austauschen von Daten oder Sprachdaten zwischen dem Kabelmodemanschlusssystem (4100) und dem Kabelmodem (4300),
**dadurch gekennzeichnet, dass** das Verfahren ferner umfasst:
- Synchronisieren des Kabelmodemanschlusssystems (4010), des Gateways (3050) und des Kabelmodems (4300) mit der externen Uhr (3040).

8. Verfahren nach Anspruch 7,
das ferner das Austauschen der Daten oder Sprachdaten zwischen dem Kabelmodem (4300) und dem zweiten Netzwerk, wobei das zweite Netzwerk ein Gerät umfasst, und das Synchronisieren des Geräts mit dem Kabelmodem (4300) umfasst.

9. Verfahren nach Anspruch 7,
das ferner das Synchronisieren der externen Uhr (3040) mit einem öffentlichen Telefonnetz (3000) umfasst.

10. Verfahren nach Anspruch 7,
das ferner das Austauschen der Sprachdaten oder Daten zwischen dem Gateway (3050) und dem Kabelmodemanschlusssystem (4010) umfasst.

## Revendications

1. Système de communication, comprenant :
un système de terminaison de modem câble (4010) couplé à un premier réseau par une passerelle (3050), le premier réseau comprenant un premier téléphone (3001) ;
comprenant de plus un modem câble (4300) couplé au système de terminaison de modem câble (4010) ; et
comprenant un second réseau couplé au modem câble (4300), le second réseau comprenant un second téléphone (4002) qui communique avec ledit premier téléphone (3001),
le système de communication étant **caractérisé par** le fait de comprendre en outre
une horloge (3040) externe au système de terminaison de modem câble (4010), le système de terminaison de modem câble (4010), la passerelle (3050) et le modem câble étant synchronisés avec l'horloge externe (3040).

2. Système de communication selon la revendication 1, dans lequel le modem câble (4300) est synchronisé avec le système de terminaison de modem câble (4010).

3. Système de communication selon la revendication 2, dans lequel le second dispositif est synchronisé avec le modem câble (4300).

4. Système de communication selon la revendication 1, comprenant de plus un réseau téléphonique public commuté (3000), l'horloge externe (3040) étant synchronisée avec le réseau téléphonique public commuté (3000).

5. Système de communication selon la revendication 4, dans lequel la passerelle (3050) est couplée entre le réseau téléphonique public commuté (3000) et le système de terminaison de modem câble (4010).

6. Système de communication selon la revendication 5, dans lequel le premier réseau est **caractérisé par** un réseau global étendu (WAN).

7. Procédé de communication dans un système comprenant un système de terminaison de modem câble (4010) couplé à un premier réseau par une passerelle (3050), une horloge (3040) externe au système de terminaison de modem câble (4010), un modem câble (4300) et un second réseau couplé au modem câble (4300), le procédé comprenant :
l'échange de données ou échange vocal entre le système de terminaison de modem câble (4010) et le modem câble (4300),
**caractérisé en ce que** le procédé comprend de plus
la synchronisation du système de terminaison de modem câble (4010), la passerelle (3050) et le modem câble (4300) à l'horloge externe (3040).

8. Procédé selon la revendication 7, comprenant en outre l'échange de données ou échange vocal entre le modem câble (4300) et le second réseau, le second réseau comprenant un dispositif et synchronisant le dispositif avec le modem câble (4300).

9. Procédé selon la revendication 7, comprenant de plus la synchronisation de l'horloge externe (3040) avec un réseau téléphonique public commuté (3000).

10. Procédé selon la revendication 7, comprenant de plus l'échange vocal ou échange de données entre la passerelle (3050) et le système de terminaison de modem câble (4010).
